# EUROPEAN PATENT SPECIFICATION

(11) **EP 4 518 485 B1**
(45) Date of publication and mention of the grant of the patent: **22.07.2026**
(21) Application number: 22939413.5
(22) Date of filing: 29.04.2022
(51) Int. Cl.: H04L 5/00, H04B 7/024

(54) **DEMODULATION REFERENCE SIGNAL PORT ALLOCATION METHOD AND APPARATUS FOR MULTI-ANTENNA PANEL COOPERATIVE TRANSMISSION**
VERFAHREN UND VORRICHTUNG ZUR ZUWEISUNG EINES DEMODULATIONSREFERENZSIGNALPORTS FÜR KOOPERATIVE ÜBERTRAGUNG MIT MEHREREN ANTENNENPANEELEN
PROCÉDÉ ET APPAREIL D'ATTRIBUTION DE PORT DE SIGNAL DE RÉFÉRENCE DE DÉMODULATION POUR UNE TRANSMISSION COOPÉRATIVE PAR PANNEAUX MULTI-ANTENNES

(43) Date of publication of application: 05.03.2025
(73) Proprietor: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/090781
(87) International publication number: WO 2023/206569

(56) References cited:
- WO-A1-2020/164117
- CN-A- 112 584 508
- US-A1- 2021 167 914
- CATT: "Considerations on multi-TRP/panel transmission", vol. RAN WG1, no. Prague, CZ; 20190826 - 20190830, 17 August 2019 (2019-08-17), XP051765210, Retrieved from the Internet <URL:http://www.3gpp.org/ftp/tsg_ran/WG1_RL1/TSGR1_98/Docs/R1-1908602.zip> [retrieved on 20190817]
- CATT: "On multi-TRP/panel transmission", vol. RAN WG1, no. Reno, USA; 20190513 - 20190517, 4 May 2019 (2019-05-04), pages 1 - 17, XP051708380, Retrieved from the Internet <URL:http://www.3gpp.org/ftp/tsg%5Fran/WG1%5FRL1/TSGR1%5F97/Docs/R1%2D1906345%2Ezip> [retrieved on 20190504]

## Description

### TECHNICAL FIELD

The disclosure relates to the field of communication technologies, and in particular, to a demodulation reference signal port allocation method and apparatus for coordinated multiple antenna ports transmission.

### BACKGROUND

In wireless communication, communication is carried out through coordinated multiple points. Network side devices are deployed in a distributed access point and baseband centralized manner. The antenna array on the network side can use multiple antenna panels or Transmission Reception Pairs (TRPs) to send/receive from multiple beams at multiple angles. During the uplink transmission process of multiple TRPs or TRPs, the data layer of data transmission in the Physical Uplink Shared Channel (PUSCH) corresponds to the demodulation reference signal (DMRS) port used for demodulation. However, there is currently a lack of flexible methods for assigning DMRS ports of PUSCH to different panels.

WO2020164117A1 discloses apparatuses, methods, and systems for indicating DMRS ports for codewords. One method (500) includes transmitting (502) downlink control information. The downlink control information includes first information used to indicate a plurality of demodulation reference signal ports for transmitting a plurality of codewords, receiving the plurality of codewords, or a combination thereof. The method (500) includes transmitting (504) second information indicating a plurality of reference signals for transmitting the plurality of codewords, receiving the plurality of codewords, or a combination thereof.

### SUMMARY

The invention is set out in the appended set of claims.

Embodiments of the present disclosure provide a demodulation reference signal port allocation method, a terminal device and a network side device for coordinated multiple antenna panel transmission, which can be applied to communication systems such as Long Term Evolution (LTE) systems, 5th generation (5G) mobile communication systems, 5G new radio (NR) systems, or other future new mobile communication systems. Through DMRS configuration information and downlink control information (DCI) signaling, the DMRS port allocation corresponding to the RANK combination of sending data layers in different TRP directions on different panels, thereby improving communication efficiency and avoiding communication resource waste.

In this technical solution, DMRS configuration information and downlink control information (DCI) signaling are provided to enable the terminal device to determine the DMRS port allocation corresponding to the RANK combination for sending data layers in different TRP directions on different panels, in order to support data transmission with a total of 4 RANK layers, including the RANK combination of 1 layer and 3 layers, thereby improving communication reliability and efficiency and avoiding communication resource waste.

### BRIEF DESCRIPTION OF THE DRAWINGS

In order to provide a clearer explanation of the technical solution in the embodiments of the present disclosure or background technology, the accompanying drawings required for use in the embodiments of the present disclosure or background technology will be described below.
FIG. 1 is a schematic diagram of an architecture of a communication system provided in an embodiment of the present disclosure.
(A) and (B) in FIG. 2 are schematic diagrams of one DMRS symbol and two DMRS symbols in DMRS type 1 provided in the related art, respectively.
(A) and (B) in FIG. 3 are schematic diagrams of one DMRS symbol and two DMRS symbols in DMRS type 2 provided in the related art, respectively.
FIG. 4 is a schematic flowchart of a DMRS port allocation method for coordinated multiple antenna panel transmission provided in an embodiment of the present disclosure.
FIG. 5 is a schematic flowchart of a DMRS port allocation method for coordinated multiple antenna panel transmission provided in an embodiment of the present disclosure.
FIG. 6 is a block diagram of a communication apparatus provided in an embodiment of the present disclosure.
FIG. 7 is a block diagram of another communication apparatus provided in an embodiment of the present disclosure.
FIG. 8 is a block diagram of a chip provided in an embodiment of the present disclosure.

### DETAILED DESCRIPTION

For ease of understanding, terms involved in this disclosure is firstly introduced.

### 1. Multi-TRP (MTRP)/multi-panel transmission technology

In order to improve coverage at the edge of the cell and provide more balanced service quality within the service area, multi-point collaboration remains an important technical means in NR systems. From the perspective of network architecture, deploying a network with a large number of distributed access points and centralized baseband processing will be more conducive to providing a balanced user experience rate and significantly reducing the latency and signaling overhead caused by handover. With the increase of frequency bands, from the perspective of ensuring network coverage, relatively dense deployment of access points is also required. In the high frequency range, with the improvement of the integration of active antenna devices, there will be a greater tendency to adopt modular active antenna arrays. The antenna array of each TRP can be divided into several relatively independent panels, so the shape and number of ports of the entire array can be flexibly adjusted according to deployment scenarios and business requirements. The panels or TRPs can also be connected by fiber optics for more flexible distributed deployment. In the millimeter wave band, as the wavelength decreases, the blocking effect caused by obstacles such as human bodies or vehicles will become more significant. In this case, from the perspective of ensuring the robustness of the link connection, cooperation between multiple TRPs or panels can also be utilized to transmit/receive from multiple beams at multiple angles, thereby reducing the adverse effects of blocking effects.

According to the mapping relationship of sending signal streams to multiple TRP/Panels, coordinated multiple point transmission technology can be divided into coherent and incoherent transmission. During coherent transmission, each data layer will be mapped onto multiple TRPs/Panels through weighted vectors. Hower, during incoherent transmission, each data stream is only mapped to a portion of the TRPs/Panels. Coherent transmission has higher requirements for synchronization between transmission points and the transmission capability of the backhaul link, making it sensitive to many non-ideal factors in real-world deployment conditions. Relatively speaking, incoherent transmission is less affected by the above factors and is therefore a key consideration for multi-point transmission technology.

It should be noted that the research and standardization work on MTRP in NR Rel-15 has not been fully carried out. R16 mainly focuses on the standardization of the Physical Downlink Shared Channel (PDSCH), while R17 enhances the standardization of Multi-TRP for PUSCH or Physical Uplink Control Channel (PUCCH), but only standardizes the Time Division Multiplexing (TDM) transmission scheme. Currently, R18 considers simultaneous transmission enhancement based on multi-panel terminal MTRP for PUSCH/PUSCH.

### 2. DMRS port

For the PDSCH/PUSCH channel, the data layer used for data transmission corresponds to the DMRS port used for demodulation. The design of data channel (PDSCH/PUSCH) DMRS in NR system mainly includes the following aspects:

Front-load DMRS: Within each scheduling time unit, the location where DMRS first appears should be as close as possible to the starting point of the scheduling. The use of Front-load DMRS helps the receiving side to quickly estimate the channel and perform reception detection, which plays an important role in reducing latency and supporting the so-called self-contained structure. Depending on the total number of orthogonal DMRS ports, Front-load DMRS can occupy up to two consecutive Orthogonal Frequency Division Multiplexing (OFDM) symbols.

Additional DMRS: For low mobility scenarios, Front-load DMRS can achieve channel estimation performance that meets demodulation requirements with lower overhead. However, the NR system considers a maximum mobile speed of up to 500km/h. Faced with such a large dynamic range of mobility, in addition to Front-load DMRS, more DMRS symbols need to be inserted during the scheduling duration in medium/high-speed scenarios to meet the estimation accuracy of channel time-varying. To address this issue, the NR system adopts a DMRS structure that combines Front-load DMRS with additional DMRS with configurable time-domain density. Each additional DMRS pattern is a repetition of the Front-load DMRS.

Within each scheduling time unit, if there is Additional DMRS, the pattern of each Additional DMRS group will be consistent with the Front-load DMRS. Therefore, the pattern design of Front-load DMRS is the foundation of DMRS design. The design concept of Front-load DMRS can be divided into two types. DMRS type 1 adopts the transmission comb COMB+OCC structure, which divides each Code Division Multiplexing (CDM) group into multiple ports through Orthogonal Cover Code (OCC); DMRS type 2 is based on the Frequency Division Multiplexing (FDM)+OCC structure.

Depending on the number of orthogonal ports used for transmission, Front-load DMRS can be configured with a maximum of two OFDM symbols. Considering the factor of power utilization efficiency, when using a two symbol Front-load DMRS, in addition to frequency domain cyclic shift (CS) or OCC, time domain orthogonal cover code (TD-OCC) is also used in the time domain.

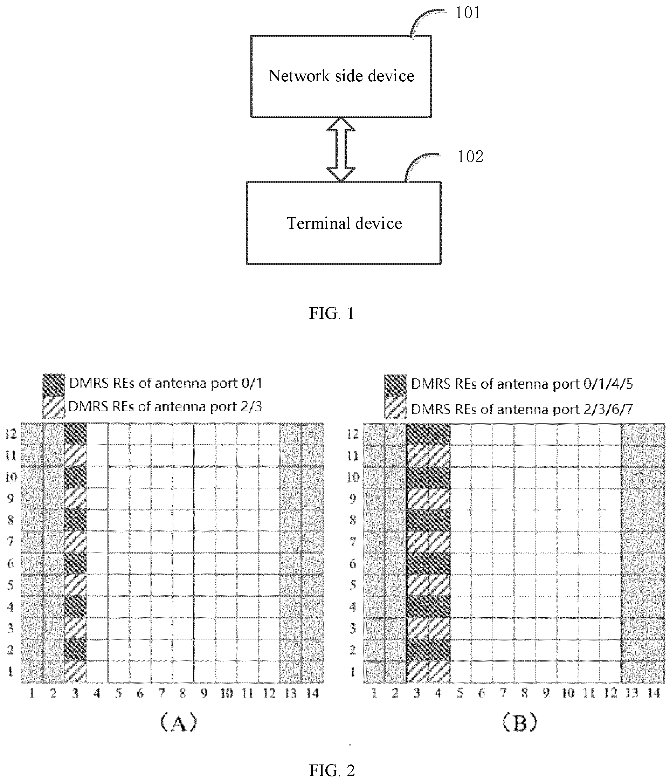

The DMRS type 1 provided in the relevant technology is shown in FIG. 2. In FIG. 2 (A), the front-load DMRS occupies one OFDM symbol, and the subcarriers of each OFDM symbol are divided into two CDM groups. Each CDM group can support the multiplexing of two DMRS ports, and each OFDM symbol can support the multiplexing of up to four DMRS ports. In FIG. 2 (B), the front-load DMRS can occupy up to two OFDM symbols, and the subcarriers of each OFDM symbol are divided into two CDM groups. Each CDM group can support the multiplexing of four DMRS ports, so each OFDM symbol can support the multiplexing of up to eight DMRS ports.

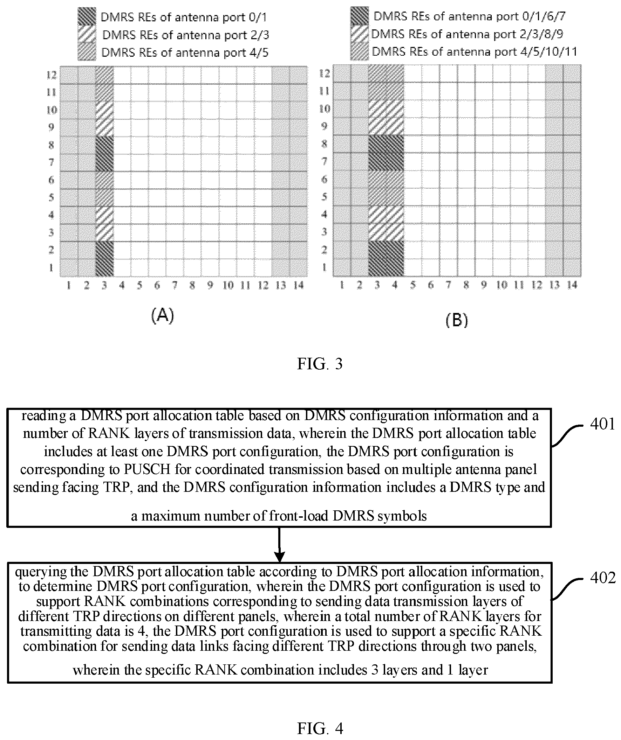

The DMRS type 2 provided in the relevant technology is shown in FIG. 3. In FIG. 3 (A), the front-load DMRS occupies one OFDM symbol, and the subcarriers of each OFDM symbol are divided into three CDM groups. Each CDM group can support the multiplexing of two DMRS ports, and each OFDM symbol can support up to six DMRS ports. In Figure 3 (B), the front-load DMRS can occupy up to two OFDM symbols, and the subcarriers of each OFDM symbol are divided into three CDM groups. Each CDM group can support the multiplexing of four DMRS ports, and each OFDM symbol can support the multiplexing of up to 12 DMRS ports.

In communication scenarios with medium/high-speed motion, in addition to Front-load DMRS, more DMRS symbols need to be inserted within the scheduling duration to meet the estimation accuracy of channel time-varying. The NR system adopts a DMRS structure that combines Front-load DMRS with additional DMRS with configurable time-domain density. Each additional DMRS pattern is a repetition of the Front-load DMRS. Therefore, the Additional DMRS is consistent with the Front-load DMRS, and each group of Additional DMRS can occupy at most two consecutive DMRS symbols. According to specific usage scenarios, up to three sets of Additional DMRS can be configured in each scheduling. The number of additional DMRS depends on the higher-layer parameter configuration and specific scheduling duration.

### 2. Quasi Co-located (QCL)

QCL refers to that the large-scale parameters of the channel experienced by a symbol on one antenna port can be inferred from the channel experienced by a symbol on another antenna port. The large-scale parameters may include delay spread, average delay, Doppler spread, Doppler shift, average gain, and spatial reception parameters.

The concept of QCL was introduced with the emergence of Coordinated Multiple Point Transmission (CoMP) technology. The multiple stations involved in the CoMP transmission process may correspond to multiple geographically different sites or multiple sectors with different antenna panel orientations. For example, when a terminal receives data from different stations, the spatial differences between respective stations can lead to differences in the large-scale channel parameters of the receiving links from different stations, such as Doppler frequency shift, delay spread, etc. The large-scale parameters of the channel will directly affect the adjustment and optimization of the filter coefficients during channel estimation. Corresponding to the signals emitted by different stations, different channel estimation filter parameters should be used to adapt to the corresponding channel propagation characteristics.

Therefore, although the differences in spatial position or angle among different sites are transparent to terminal devices and CoMP operations themselves, the impact of these spatial differences on large-scale channel parameters is an important factor that terminal devices need to consider when performing channel estimation and reception detection. The so-called QCL of two antenna ports under certain large-scale parameter meanings refers to the fact that these large-scale parameters of these two ports are the same. Or in other words, as long as certain large-scale parameters of two ports are consistent, regardless of their actual physical location or whether there is a difference in the orientation of the corresponding antenna panels, the terminal can consider these two ports to originate from the same location (i.e. quasi co-located site).

For some application scenarios, considering the possible QCL relationships between various reference signals, from the perspective of simplifying signaling, NR divides several large-scale channel parameters into the following four types for the system to configure/indicate according to different scenarios:
QCL-TypeA: {Doppler shift, Doppler spread, average delay, delay spread} in which, except for spatial reception parameters, all other large-scale parameters are the same. For frequency bands below 6GHz, spatial reception parameters may not be necessary.
QCL-TypeB: {Doppler shift, Doppler spread}, which only applies to the following two situations in the frequency band below 6GH.
QCL-TypeC: {Doppler shift, average delay}
QCL-TypeD: {Space Reception Parameters}. As mentioned earlier, since the space reception parameters mainly target frequency bands above 6GHz, they are treated as a separate QCL type.

According to NR Rel-15, the DMRS ports within each CDM group are QCL.

In order to better understand the demodulation reference signal port allocation method for coordinated multiple antenna panel transmission disclosed in embodiments of the present application, the following first describes the communication system applicable to the embodiments of the present application.

Please refer to FIG. 1, which is a schematic diagram of the architecture of a communication system provided in an embodiment of the present disclosure. The communication system may include, but is not limited to, one network side device and one terminal device. The number and form of devices shown in FIG. 1 are for example only and do not constitute a limitation on the embodiments of the present disclosure. In practical applications, it may include two or more network side devices and two or more terminal devices. The communication system shown in FIG. 1 takes the example of including one network side device 101 and one terminal device 102.

It should be noted that the technical solution of embodiments of the present disclosure can be applied to various communication systems, for example, Long Term Evolution (LTE) systems, 5th generation (5G) mobile communication systems, 5G new radio (NR) systems, or other future new mobile communication systems. It should be noted that the side link in the embodiments of the present disclosure can also be referred to as a sidelink or a direct link.

The network side device 101 in embodiments of the present disclosure is an entity used for transmitting or receiving signals on the network side. For example, the network side device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of this disclosure do not limit the specific technology and device form adopted by the network side devices. The network side device provided in the embodiments of the present disclosure may be composed of a central unit (CU) and a distributed unit (DU), where CU can also be referred to as a control unit. The CU-DU structure can be used to separate the protocol layers of network side devices, such as base stations, with some protocol layer functions centrally controlled by CU and the remaining or all protocol layer functions distributed in DU, which is centrally controlled by CU.

The terminal device 102 in embodiments of the present disclosure is an entity on the user side used for receiving or transmitting signals, such as a mobile phone. Terminal devices can also be referred to as terminals, user equipment (UE), mobile stations (MS), mobile terminals (MTs), etc. Terminal devices may be communication enabled cars, smart cars, mobile phones, wearable devices, tablets, computers with wireless transmission and reception capabilities, virtual reality (VR) terminal devices, augmented reality (AR) terminal devices, wireless terminal devices in industrial control, wireless terminal devices in autonomous driving, wireless terminal devices in remote medical surgery, wireless terminal devices in smart grids, wireless terminal devices in transportation safety, wireless terminal devices in smart cities, and wireless terminal devices in smart homes, etc. The embodiments of this disclosure do not limit the specific technology and device form adopted by the terminal device.

In related technologies, the DMRS port allocation table for different parameter configurations under the existing uplink CP-OFDM waveform of R17 protocol is shown below.

**Table 1: Antenna port(s), DMRS Type=1, max number of front-load DMRS symbols=1, RANK = 1**

| Value | **Number of DMRS CDM group(s) without data** | **DMRS port(s)** |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

**Table 2: Antenna port(s), DMRS Type=1, max number of front-load DMRS symbols=1, RANK = 2**

| **Value** | **Number of DMRS CDM group(s) without data** | **DMRS port(s)** |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

**Table 3: Antenna port(s), DMRS Type=1, max number of front-load DMRS symbols=1, RANK = 3**

| **Value** | **Number of DMRS CDM group(s) without data** | **DMRS port(s)** |
|---|---|---|
| 0 | 2 | 0-2 |
| 2-7 | Reserved | Reserved |

**Table 4: Antenna port(s), DMRS Type=1, max number of front-load DMRS symbols=1, RANK = 4**

| **Value** | **Number of DMRS CDM group(s) without data** | **DMRS port(s)** |
|---|---|---|
| 0 | 2 | 0-3 |
| 2-7 | Reserved | Reserved |

**Table 5: Antenna port(s), DMRS Type=1, max number of front-load DMRS svmbols=2. RANK = 1**

| **Value** | **Number of DMRS CDM group(s) without data** | **DMRS port(s)** | **Number of front-load symbols** |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

**Table 6: Antenna port(s), DMRS Type=1, max number of front-load DMRS symbols=2, RANK = 2**

| **Value** | **Number of DMRS CDM group(s) without data** | **DMRS port(s)** | **Number of front-load symbols** |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

**Table 7: Antenna port(s), DMRS Type=1, max number of front-load DMRS symbols=2, RANK = 3**

| **Value** | **Number of DMRS CDM group(s) without data** | **DMRS port(s)** | **Number of front-load symbols** |
|---|---|---|---|
| 0 | 2 | 0-2 | 1 |
| 1 | 2 | 0,1,4 | 2 |
| 2 | 2 | 2,3,6 | 2 |
| 3-15 | Reserved | Reserved | Reserved |

**Table 8: Antenna port(s), DMRS Type=1, max number of front-load DMRS svmbols=2. RANK = 4**

| **Value** | **Number of DMRS CDM group(s) without data** | **DMRS port(s)** | **Number of front-load symbols** |
|---|---|---|---|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| 4-15 | Reserved | Reserved | Reserved |

**Table 9: Antenna port(s). DMRS Type=2, max number of front-load DMRS smbols=1, RANK = 1**

| **Value** | **Number of DMRS CDM group(s) without data** | **DMRS port(s)** |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

**Table 10: Antenna port(s), DMRS Type=2, max number of front-load DMRS symbols=1, RANK = 2**

| **Value** | **Number of DMRS CDM group(s) without data** | **DMRS port(s)** |
|---|---|---|
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7-15 | Reserved | Reserved |

**Table 11: Antenna port(s), DMRS Type=2, max number of front-load DMRS symbols=1, RANK = 3**

| **Value** | **Number of DMRS CDM group(s) without data** | **DMRS port(s)** |
|---|---|---|
| 0 | 2 | 0-2 |
| 1 | 3 | 0-2 |
| 2 | 3 | 3-5 |
| 3-15 | Reserved | Reserved |

**Table 12: Antenna port(s), DMRS Type=2, max number of front-load DMRS symbols=1, RANK = 4**

| **Value** | **Number of DMRS CDM group(s) without data** | **DMRS port(s)** |
|---|---|---|
| 0 | 2 | 0-3 |
| 1 | 3 | 0-3 |
| 2-15 | Reserved | Reserved |

**Table 13: Antenna port(s), DMRS Type=2, max number of front-load DMRS symbols=2, RANK = 1**

| **Value** | **Number of DMRS CDM group(s) without data** | **DMRS port(s)** | **Number of front-load symbols** |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

**Table 14: Antenna port(s), DMRS Type=2, max number of front-load DMRS symbols=2, RANK = 2**

| **Value** | **Number of DMRS CDM group(s) without data** | **DMRS port(s)** | **Number of front-load symbols** |
|---|---|---|---|
| 0 | 1 | 0,1 | 1 |
| 1 | 2 | 0,1 | 1 |
| 2 | 2 | 2,3 | 1 |
| 3 | 3 | 0,1 | 1 |
| 4 | 3 | 2,3 | 1 |
| 5 | 3 | 4,5 | 1 |
| 6 | 2 | 0,2 | 1 |
| 7 | 3 | 0,1 | 2 |
| 8 | 3 | 2,3 | 2 |
| 9 | 3 | 4,5 | 2 |
| 10 | 3 | 6,7 | 2 |
| 11 | 3 | 8,9 | 2 |
| 12 | 3 | 10,11 | 2 |
| 13 | 1 | 0,1 | 2 |
| 14 | 1 | 6,7 | 2 |
| 15 | 2 | 0,1 | 2 |
| 16 | 2 | 2,3 | 2 |
| 17 | 2 | 6,7 | 2 |
| 18 | 2 | 8,9 | 2 |
| 19-31 | Reserved | Reserved | Reserved |

**Table 15: Antenna port(s), DMRS Type=2, max number of front-load DMRS symbols=2, RANK = 3**

| **Value** | **Number of DMRS CDM group(s) without data** | **DMRS port(s)** | **Number of front-load symbols** |
|---|---|---|---|
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |
| 6-31 | Reserved | Reserved | Reserved |

**Table 16: Antenna port(s), DMRS Type=2, max number of front-load DMRS svmbols=2. RANK = 4**

| **Value** | **Number of DMRS CDM group(s) without data** | **DMRS port(s)** | **Number of front-load symbols** |
|---|---|---|---|
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| 5-31 | Reserved | Reserved | Reserved |

The table corresponding to the antenna port can be determined based on the DMRS type dmrs-Type, maximum number of front-load DMRS symbols maxLength, and RANK. In each table, Value is the index, which corresponds to the configuration in the corresponding row. Based on the Value, the corresponding DMRS port configuration can be obtained, including the number of DMRS CDM groups without data, DMRS port number, and the number of first-load DMRS symbols.

In the uplink enhancement of R18, it is necessary to consider how to support higher throughput and more reliable transmission performance through simultaneous uplink transmission of multiple Panels/TRPs. In order to support simultaneous uplink SDM transmission schemes, the current RANK combination cannot meet the configuration requirements for flexible transmission. RANK number and allocation. Therefore, based on the current DMRS port allocation combination, it is necessary to consider how to increase different RANK combinations for different RANK numbers under the SDM transmission scheme. The communication conditions vary in different TRP directions. Allocating more DMRS ports in the TRP direction with better communication conditions and fewer DMRS ports in the TRP direction with poorer communication conditions can improve the reliability and efficiency of uplink transmission. However, there are few port allocation methods that support RANK combination in the existing DMRS allocation table.

It can be understood that the communication system described in the embodiments of the present disclosure is for a clearer explanation of the technical solution provided in the embodiments of the present disclosure, and does not constitute a limitation on the technical solution provided in the embodiments of the present disclosure. Those of ordinary skill in the art know that with the evolution of system architecture and the emergence of new business scenarios, the technical solution provided in the embodiments of the present disclosure is also applicable to similar technical problems.

The following provides a detailed introduction to the demodulation reference signal port allocation method and apparatus for coordinated multiple antenna panel transmission provided in this disclosure, combined with the accompanying drawings.

Please refer to FIG. 4, which is a flowchart of a demodulation reference signal port allocation method for coordinated multiple antenna panel transmission provided in an embodiment of the present disclosure. The method is applied to a terminal device. As shown in FIG. 4, the method may include but is not limited to the following steps.

In step 401, a DMRS port allocation table is read based on DMRS configuration information and a number of transmission data RANK layers (i.e., RAN layers for data transmission). The DMRS port allocation table includes at least one DMRS port configuration, the DMRS port configuration corresponds to PUSCH for coordinated transmission sent based on multiple antenna panel facing a TRP, and the DMRS configuration information includes the DMRS type and the maximum number of front-load DMRS symbols.

In embodiments of the present disclosure, the terminal device reads the DMRS port allocation table through the DMRS configuration information and the rank number for transmission data sent by the network side device. In the process of configuring the DMRS port, it is necessary to determine the DMRS port allocation table to be queried based on the parameters sent by the network side device, to instruct the terminal device to perform multi Panel or multi TRP communication. The terminal device can uniquely determine a DMRS port allocation table by receiving the DMRS configuration information and RANK number sent by the network side. The RANK number refers to the number of layers used for transmitting data, which is equal to the total number of allocated DMRS ports.

In step 402, the DMRS port allocation table is queried according to DMRS port allocation information, to determine DMRS port configuration. The DMRS port configuration is used to support RANK combinations for sending data transmission layers of different TRP directions on different panels. The total number of RANK transmission layers is 4. The DMRS port configuration is used to support a specific RANK combination for sending data links facing different TRP directions through two panels. The specific RANK combination includes 3 layers and 1 layer.

In embodiments of the present disclosure, in order to further determine the DMRS ports allocated by RANK combinations corresponding to different panels in different beam directions, the terminal device queries the specific DMRS port configuration in the DMRS port allocation table through the DMRS port allocation information. The main purpose of embodiments of the present disclosure is to support the specific RANK combination for sending data links facing different TRP directions through two panels when the total number of RANK layers for data transmission is 4. The specific RANK combination includes 3 layers and 1 layer, and the DCI signaling indicates that the total number of RANK layers for scheduled data transmission is 4.

In order to enable the Panel on the terminal device to send beams in different beam directions, or to send beams to different TRPs on the network side devices in different beam directions, it is necessary to allocate corresponding DMRS ports in different beam information indication directions, and it is necessary to ensure that DMRS ports allocated in different beam information indication directions are not co-located, and DMRS ports allocated in the same beam information indication direction are quasi co-located. As mentioned above, the DMRS ports within each CDM group are quasi co-located with each other, which means that it is necessary to allocate DMRS ports from different CDM groups to achieve RANK combination.

In a possible implementation, when the scheduled total number of RANK layers for data transmission indicated by DCI is 4, in order to use two Panels or two TRPs to transmit data in two beam information indication directions, the data link facing a TRP with Panel in the first beam information indication direction needs to support the transmission of data layer with the RANK number being 1, and the data link facing a TRP with Panel in the second beam information indication direction needs to support the transmission of data layer with the RANK number being 2, in order to achieve RANK combination of RANK1+RANK2. One DMRS port needs to be allocated to the Panel for transmitting and TPR for receiving in the direction indicated by the first beam information, and two DMRS ports need to be allocated to the Panel for transmitting and TPR for receiving in the direction indicated by the second beam information. The DMRS ports corresponding to the first beam information direction and any one of the DMRS ports corresponding to the second beam information direction are not allowed to be co-located with each other, the DMRS ports corresponding to the first beam information direction are quasi co-located with each other, and the DMRS ports corresponding to the second beam information direction are quasi co-located with each other. The communication conditions are different in different beam information indication directions. More DMRS ports are allocated in the beam information indication direction with better communication conditions, and fewer DMRS ports are allocated in the beam information indication direction with poorer communication conditions. This can improve the reliability and efficiency of uplink transmission between network side devices and terminal devices. However, in the existing DMRS allocation table, there are few port allocation modes that support RANK combination implementation.

In this technical solution, DMRS configuration information and downlink control information (DCI) signaling are provided to enable the terminal device to determine the DMRS port allocation corresponding to the RANK combination for sending data layers in different TRP directions on different panels. This supports a total of 4 RANK layers for data transmission, including the RANK combination of 1 layer and 3 layers, thereby improving communication reliability and efficiency and avoiding communication resource waste.

Optionally, when the DMRS type is 1 and the maximum number of front-load DMRS symbols is 2, the DMRS port configuration corresponding to the RANK combination of supporting 3 layers and 1 layer for sending data links facing different TRP directions through two panels is: DMRS port combination {0, 1, 2, 4},

in which, the DMRS ports 0, 1, and 4 are used to support that the number of data layers sent in the first beam information indication direction corresponds to the number of RANK layers of 3, the DMRS port 2 is used to support that the number of data layers sent in the second beam information indication direction corresponds to the number of RANK layers of 1, and the DMRS ports 0, 1, and 4 are quasi co-located.

In this embodiment of the present disclosure, subcarriers of each OFDM symbol are divided into two CDM groups. When the number of scheduled RANK layers for data transmission indicated in the DCI signaling is 4, in order to support the implementation of RANK4 using RANK combination of RANK3+RANK1, the DMRS port combination allocated to the two panels is {0, 1, 2, 4}, as shown in FIG. 2 (B). DMRS ports 0, 1, 4 and DMRS port 2 do not belong to the same CDM group, that is, the DMRS ports 0, 1, 4 are quasi co-located with each other. Then, the DMRS ports 0, 1, and 4 can be configured for the first Panel or the first TRP in the first beam information indication direction, to achieve a corresponding number of RANK layers of 3 for the number of data layers sent in the first beam information indication direction, and the DMRS port 2 can be configured for the second Panel or the second TRP in the second beam information indication direction, to achieve a corresponding number of RANK layer of 1 for the number of data layers sent in the second beam information indication direction.

Optionally, when the DMRS type is 1 and the maximum number of front-load DMRS symbols is 2, the DMRS port configuration corresponding to the RANK combination of supporting 1 layer and 3 layers for sending data links facing different TRP directions through two panels is: DMRS port combination {0, 2, 3, 6},

in which, the DMRS port 0 is used to support that the number of data layers sent in the first beam information indication direction corresponds to the number of RANK layers of 1, the DMRS ports 2, 3, 6 are used to support that the number of data layers sent in the second beam information indication direction corresponds to the number of RANK layers of 3, and the DMRS ports 2, 3, and 6 are quasi co-located.

In this embodiment of the present disclosure, subcarriers of each OFDM symbol are divided into two CDM groups. In order to support the implementation of RANK4 using RANK combination of RANK1+RANK3, the DMRS port combination allocated to the two panels is {0, 2, 3, 6}. As shown in FIG. 2 (B), DMRS port 0 and DMRS ports 2, 3, 6 do not belong to the same CDM group, that is, the DMRS ports 2, 3, 6 are quasi co-located with each other. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2, 3, 6 can be configured for the second Panel or the second TRP in the second beam information indication direction, to achieve a corresponding number of RANK layers of 3 for the number of data layers sent in the second beam information indication direction.

Optionally, when the DMRS type is 2, the maximum number of front-load DMRS symbols is 1, the RANK occupies 3 CDM groups, and the DMRS ports of the second and third CDM groups are quasi co-located, the DMRS port configuration corresponding to the RANK combination of supporting 1 layer and 3 layers for sending data links facing different TRP directions through two panels is at least one of the following:
DMRS port combination {0, 2, 3, 4},
DMRS port combination {0, 2, 4, 5},
DMRS port combination {0, 3, 4, 5};
in the DMRS port combination {0, 2, 3, 4}, the DMRS port 0 is used to support that the number of data layers sent in the first beam information indication direction corresponds to the number of RANK layers of 1, the DMRS ports 2, 3, 4 are used to support that the number of data layers sent in the second beam information indication direction corresponds to the number of RANK layers of 3, and the DMRS ports 2, 3, and 4 are quasi co-located;
in the DMRS port combination {0, 2, 4, 5}, the DMRS port 0 is used to support that the number of data layers sent in the first beam information indication direction corresponds to the number of RANK layers of 1, the DMRS ports 2, 4, 5 are used to support that the number of data layers sent in the second beam information indication direction corresponds to the number of RANK layers of 3, and the DMRS ports 2, 4, and 5 are quasi co-located;
in the DMRS port combination {0, 3, 4, 5}, the DMRS port 0 is used to support that the number of data layers sent in the first beam information indication direction corresponds to the number of RANK layers of 1, the DMRS ports 3, 4, 5 are used to support that the number of data layers sent in the second beam information indication direction corresponds to the number of RANK layers of 3, and the DMRS ports 3, 4, 5 are quasi co-located.

In this embodiment of the present disclosure, subcarriers of each OFDM symbol are divided into three CDM groups. In order to support the implementation of RANK4 using RANK combination of RANK1+RANK3, the DMRS port combinations assigned to the two panels are at least one of DMRS port combinations {0, 2, 3, 4}, {0, 2, 4, 5}, or {0, 3, 4, 5}. The DMRS ports of the second CDM group and the third CDM group are quasi co-located, that is, DMRS ports 2, 3, 4, and 5 are quasi co-located with each other, and DMRS ports 0 and 1 are quasi co-located.

As shown in FIG. 3(A), in the DMRS port combination {0, 2, 3, 4}, the DMRS ports of the first CDM group and the second CDM group are quasi co-located, that is, the DMRS ports 2, 3, and 6 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2, 3, and 6 can be configured for the second Panel or the second TRP in the second beam information indication direction, to achieve a corresponding number of RANK layers of 3 for the number of data layers sent in the second beam information indication direction.

As shown in FIG. 3(A), in the DMRS port combination {0, 2, 4, 5}, the DMRS ports of the first CDM group and the second CDM group are quasi co-located, that is, the DMRS ports 2, 4, and 5 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2, 4, and 5 can be configured for the second Panel or the second TRP in the second beam information indication direction, to achieve a corresponding number of RANK layers of 3 for the number of data layers sent in the second beam information indication direction.

As shown in FIG. 3(A), in the DMRS port combination {0, 3, 4, 5}, the DMRS ports of the first CDM group and the second CDM group are quasi co-located, that is, the DMRS ports 3, 4, and 5 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 3, 4, and 5 can be configured for the second Panel or the second TRP in the second beam information indication direction, to achieve a corresponding number of RANK layers of 3 for the number of data layers sent in the second beam information indication direction.

Optionally, when the DMRS type is 2, the maximum number of front-load DMRS symbols is 1, the RANK occupies 3 CDM groups, and DMRS ports of a first CDM group and a second CDM group are quasi co-located, the DMRS port configuration corresponding to the RANK combination of supporting 3 layers and 1 layer for sending data links facing different TRP directions through two panels is at least one of the following:
DMRS port combination {0, 1, 2, 4},
DMRS port combination {0, 1, 2, 5},
DMRS port combination {0, 2, 3, 4},
DMRS port combination {0, 2, 3, 5};
in the DMRS port combination {0, 1, 2, 4}, the DMRS ports 0, 1, 2 are used to support that the number of data layers sent in the first beam information indication direction corresponds to the number of RANK layers of 3, the DMRS port 4 is used to support that the number of data layers sent in the second beam information indication direction corresponds to the number of RANK layers of 1, and the DMRS ports 0, 1, and 2 are quasi co-located;
in the DMRS port combination {0, 1, 2, 5}, the DMRS ports 0, 1, 2 are used to support that the number of data layers sent in the first beam information indication direction corresponds to the number of RANK layers of 3, the DMRS port 5 is used to support that the number of data layers sent in the second beam information indication direction corresponds to the number of RANK layers of 1, and the DMRS ports 0, 1, and 2 are quasi co-located;
in the DMRS port combination {0, 2, 3, 4}, the DMRS ports 0, 2, 3 are used to support that the number of data layers sent in the first beam information indication direction corresponds to the number of RANK layers of 3, the DMRS port 4 is used to support that the number of data layers sent in the second beam information indication direction corresponds to the number of RANK layers of 1, and the DMRS ports 0, 2, and 3 are quasi co-located;
in the DMRS port combination {0, 2, 3, 5}, the DMRS ports 0, 2, 3 are used to support that the number of data layers sent in the first beam information indication direction corresponds to the number of RANK layers of 3, the DMRS port 5 is used to support that the number of data layers sent in the second beam information indication direction corresponds to the number of RANK layers of 1, and the DMRS ports 0, 2, and 3 are quasi co-located.

In this embodiment of the present disclosure, subcarriers of each OFDM symbol are divided into three CDM groups, where the DMRS ports of the first CDM group and the second CDM group are quasi co-located, that is, DMRS ports 0, 1, 2, and 3 are quasi co-located with each other, and DMRS ports 4 and 5 are quasi co-located.

As shown in FIG. 3(A), in the DMRS port combination {0, 1, 2, 4}, the DMRS ports of the first CDM group and the second CDM group are quasi co-located, that is, the DMRS ports 0, 1, and 2 are quasi co-located. Then, the DMRS ports 0, 1 and 2 can be configured for the first Panel or the first TRP in the first beam information indication direction, to achieve a corresponding number of RANK layers of 3 for the number of data layers sent in the first beam information indication direction, and the DMRS port 4 can be configured for the second Panel or the second TRP in the second beam information indication direction, to achieve a corresponding number of RANK layers of 1 for the number of data layers sent in the second beam information indication direction.

As shown in FIG. 3(A), in the DMRS port combination {0, 1, 2, 5}, the DMRS ports of the first CDM group and the second CDM group are quasi co-located, that is, the DMRS ports 0, 1, and 2 are quasi co-located. Then, the DMRS ports 0, 1 and 2 can be configured for the first Panel or the first TRP in the first beam information indication direction, to achieve a corresponding number of RANK layers of 3 for the number of data layers sent in the first beam information indication direction, and the DMRS port 5 can be configured for the second Panel or the second TRP in the second beam information indication direction, to achieve a corresponding number of RANK layers of 1 for the number of data layers sent in the second beam information indication direction.

As shown in FIG. 3(A), in the DMRS port combination {0, 2, 3, 4}, the DMRS ports of the first CDM group and the second CDM group are quasi co-located, that is, the DMRS ports 0, 2, and 3 are quasi co-located. Then, the DMRS ports 0, 2 and 3 can be configured for the first Panel or the first TRP in the first beam information indication direction, to achieve a corresponding number of RANK layers of 3 for the number of data layers sent in the first beam information indication direction, and the DMRS port 4 can be configured for the second Panel or the second TRP in the second beam information indication direction, to achieve a corresponding number of RANK layers of 1 for the number of data layers sent in the second beam information indication direction.

As shown in FIG. 3(A), in the DMRS port combination {0, 2, 3, 5}, the DMRS ports of the first CDM group and the second CDM group are quasi co-located, that is, the DMRS ports 0, 2, and 3 are quasi co-located. Then, the DMRS ports 0, 2 and 3 can be configured for the first Panel or the first TRP in the first beam information indication direction, to achieve a corresponding number of RANK layers of 3 for the number of data layers sent in the first beam information indication direction, and the DMRS port 5 can be configured for the second Panel or the second TRP in the second beam information indication direction, to achieve a corresponding number of RANK layers of 1 for the number of data layers sent in the second beam information indication direction.

Optionally, when the DMRS type is 2, the maximum number of front-load DMRS symbols is 2, and the RANK occupies 2 CDM groups, the DMRS port configuration corresponding to the RANK combination of supporting 1 layer and 3 layers for sending data links facing different TRP directions through two panels is at least one of the following:
DMRS port combination {0, 2, 3, 8},
DMRS port combination {0, 4, 5, 10};
in the DMRS port combination {0, 2, 3, 8}, the DMRS port 0 is used to support that the number of data layers sent in the first beam information indication direction corresponds to the number of RANK layers of 1, the DMRS ports 2, 3 and 8 are used to support that the number of data layers sent in the second beam information indication direction corresponds to the number of RANK layers of 3, and the DMRS ports 2, 3, and 8 are quasi co-located;
in the DMRS port combination {0, 4, 5, 10}, the DMRS port 0 is used to support that the number of data layers sent in the first beam information indication direction corresponds to the number of RANK layers of 1, the DMRS ports 4, 5 and 10 are used to support that the number of data layers sent in the second beam information indication direction corresponds to the number of RANK layers of 3, and the DMRS ports 4, 5, and 10 are quasi co-located.

As shown in FIG. 3(B), in the DMRS port combination {0, 2, 3, 8}, the DMRS port 0 and the DMRS ports 2, 3, 8 do not belong to the same CDM group, that is, the DMRS ports 2, 3 and 8 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2, 3 and 8 can be configured for the second Panel or the second TRP in the second beam information indication direction, to achieve a corresponding number of RANK layers of 3 for the number of data layers sent in the second beam information indication direction.

As shown in FIG. 3(B), in the DMRS port combination {0, 4, 5, 10}, the DMRS port 0 and the DMRS ports 4, 5, 10 do not belong to the same CDM group, that is, the DMRS ports 4, 5 and 10 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 4, 5 and 10 can be configured for the second Panel or the second TRP in the second beam information indication direction, to achieve a corresponding number of RANK layers of 3 for the number of data layers sent in the second beam information indication direction.

Optionally, when the DMRS type is 2, the maximum number of front-load DMRS symbols is 2, and the RANK occupies 2 CDM groups, the DMRS port configuration corresponding to the RANK combination of supporting 3 layers and 1 layer for sending data links facing different TRP directions through two panels is at least one of the following:
DMRS port combination {0, 1, 2, 6},
DMRS port combination {0, 1, 4, 6};
in the DMRS port combination {0, 1, 2, 6}, the DMRS ports 0, 1 and 6 are used to support that the number of data layers sent in the first beam information indication direction corresponds to the number of RANK layers of 3, the DMRS port 2 is used to support that the number of data layers sent in the second beam information indication direction corresponds to the number of RANK layers of 1, and the DMRS ports 0, 1, and 6 are quasi co-located;
in the DMRS port combination {0, 1, 4, 6}, the DMRS ports 0, 1 and 6 are used to support that the number of data layers sent in the first beam information indication direction corresponds to the number of RANK layers of 3, the DMRS port 4 is used to support that the number of data layers sent in the second beam information indication direction corresponds to the number of RANK layers of 1, and the DMRS ports 0, 1, and 6 are quasi co-located.

As shown in FIG. 3(B), in the DMRS port combination {0, 1, 2, 6}, the DMRS ports 0, 1, 2 and the DMRS port 6 do not belong to the same CDM group, that is, the DMRS ports 0, 1 and 2 are quasi co-located. Then, the DMRS port 0, 1, 2 can be configured for the first Panel or the first TRP in the first beam information indication direction, to achieve a corresponding number of RANK layers of 3 for the number of data layers sent in the first beam information indication direction, and the DMRS port 6 can be configured for the second Panel or the second TRP in the second beam information indication direction, to achieve a corresponding number of RANK layers of 1 for the number of data layers sent in the second beam information indication direction.

As shown in FIG. 3(B), in the DMRS port combination {0, 1, 4, 6}, the DMRS ports 0, 1, 4 and the DMRS port 6 do not belong to the same CDM group, that is, the DMRS ports 0, 1 and 4 are quasi co-located. Then, the DMRS port 0, 1, 4 can be configured for the first Panel or the first TRP in the first beam information indication direction, to achieve a corresponding number of RANK layers of 3 for the number of data layers sent in the first beam information indication direction, and the DMRS port 6 can be configured for the second Panel or the second TRP in the second beam information indication direction, to achieve a corresponding number of RANK layers of 1 for the number of data layers sent in the second beam information indication direction.

Optionally, when the DMRS type is 2, the maximum number of front-load DMRS symbols is 2, the RANK occupies 3 CDM groups, and DMRS ports of a second CDM group and a third CDM group are quasi co-located, the DMRS port configuration corresponding to the RANK combination of supporting 1 layer and 3 layers for sending data links facing different TRP directions through two panels is at least one of the following:
DMRS port combination {0, 2, 3, 4},
DMRS port combination {0, 2, 4, 5};
in the DMRS port combination {0, 2, 3, 4}, the DMRS port 0 is used to support that the number of data layers sent in the first beam information indication direction corresponds to the number of RANK layers of 1, the DMRS ports 2, 3 and 4 are used to support that the number of data layers sent in the second beam information indication direction corresponds to the number of RANK layers of 3, and the DMRS ports 2, 3, and 4 are quasi co-located;
in the DMRS port combination {0, 2, 4, 5}, the DMRS port 0 is used to support that the number of data layers sent in the first beam information indication direction corresponds to the number of RANK layers of 1, the DMRS ports 2, 4 and 5 are used to support that the number of data layers sent in the second beam information indication direction corresponds to the number of RANK layers of 3, and the DMRS ports 2, 4, and 5 are quasi co-located.

In this embodiment of the present disclosure, subcarriers of each OFDM symbol are divided into three CDM groups, where the DMRS ports of the second and third CDM groups are quasi co-located, i.e. DMRS ports 0, 1, 6, 7 are quasi co-located with each other, and DMRS ports 2, 3, 8, 9, 4, 5, 10, 11 are quasi co-located with each other.

As shown in FIG. 3(B), in the DMRS port combination {0, 2, 3, 4}, the DMRS ports of the second CDM group and the third CDM group are quasi co-located, that is, the DMRS ports 2, 3, and 4 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2, 3 and 4 can be configured for the second Panel or the second TRP in the second beam information indication direction, to achieve a corresponding number of RANK layers of 3 for the number of data layers sent in the second beam information indication direction.

As shown in FIG. 3(B), in the DMRS port combination {0, 2, 4, 5}, the DMRS ports of the second CDM group and the third CDM group are quasi co-located, that is, the DMRS ports 2, 4, and 5 are quasi co-located. Then, the DMRS port 0 can be configured for the first Panel or the first TRP in the first beam information indication direction, to achieve a corresponding number of RANK layers of 1 for the number of data layers sent in the first beam information indication direction, and the DMRS ports 2, 4 and 5 can be configured for the second Panel or the second TRP in the second beam information indication direction, to achieve a corresponding number of RANK layers of 3 for the number of data layers sent in the second beam information indication direction.

Optionally, when the DMRS type is 2, the maximum number of front-load DMRS symbols is 2, the RANK occupies 3 CDM groups, and DMRS ports of a first CDM group and a second CDM group are quasi co-located, the DMRS port configuration corresponding to the RANK combination of supporting 3 layers and 1 layer for sending data links facing different TRP directions through two panels is DMRS port combination {0, 1, 2, 4}, in which the DMRS ports 0, 1 and 2 are used to support that the number of data layers sent in the first beam information indication direction corresponds to the number of RANK layers of 3, the DMRS port 4 is used to support that the number of data layers sent in the second beam information indication direction corresponds to the number of RANK layers of 1, and the DMRS ports 0, 1 and 2 are quasi co-located.

In this embodiment of the present disclosure, subcarriers of each OFDM symbol are divided into three CDM groups, where the DMRS ports of the first CDM group and the second CDM group are quasi co-located, namely DMRS ports 0, 1, 6, 7, 2, 3, 8, and 9 are quasi co-located with each other, and DMRS ports 4, 5, 10, and 11 are quasi co-located with each other.

As shown in FIG. 3(B), in the DMRS port combination {0, 1, 2, 4}, the DMRS ports of the first CDM group and the second CDM group are quasi co-located, that is, the DMRS ports 0, 1, and 2 are quasi co-located. Then, the DMRS ports 0, 1, 2 can be configured for the first Panel or the first TRP in the first beam information indication direction, to achieve a corresponding number of RANK layers of 3 for the number of data layers sent in the first beam information indication direction, and the DMRS ports 4 can be configured for the second Panel or the second TRP in the second beam information indication direction, to achieve a corresponding number of RANK layers of 1 for the number of data layers sent in the second beam information indication direction.

Optionally, a transmission mode of PUSCH coordinated transmission for sending through multiple panels facing multiple TRPs is spatial division multiplexing (SDM) mode.

In embodiments of the present disclosure, multiple panels of the terminal device send beams to multiple TRPs in the network side device to cooperate in transmitting data in PUSCH. The transmission mode is SDM mode, which allows the same frequency band to be reused in different spaces, known as spatial division multiplexing. In mobile communication, adaptive array antennas can be used to form different beams in different user directions to achieve spatial division multiplexing.

Optionally, the beam information indication direction is determined by uplink detection resource indication information (SRI) or uplink transmission configuration indication information (UL TCI).

In embodiments of the present disclosure, the first beam information indication direction or the second beam information indication direction is indicated by SRI or UL TCI.

For the case of uplink transmission between two panels or two TRPs, two SRIs-SRI1 and SRI2 can be used to indicate the first beam information indication direction or the second beam information indication direction corresponding to the two panels or two TRPs, respectively. Alternatively, two UL TCIs-TCI1 and TCI2 can be used to indicate the first beam information indication direction or the second beam information indication direction corresponding to the two panels or two TRPs, respectively.

Optionally, the first beam information indication direction corresponds to a transmission beam direction of a first Panel on the terminal device or a transmission beam direction facing a first TRP of the network side device; the second beam information indication direction corresponds to a transmission beam direction of a second Panel on the terminal device or a transmission beam direction facing a second TRP of the network side device.

In embodiments of the present disclosure, the first panel transmits data to the corresponding first TRP in the first beam information indication direction, and the second panel transmits data to the corresponding second TRP in the second beam information indication direction.

Optionally, the DMRS configuration information is indicated by a higher-layer signaling.

Optionally, the number of RANK layers for data transmission is indicated by a DCI signaling.

Optionally, the DMRS port allocation information is determined by an antenna port indication field in the DCI signaling.

In embodiments of the present disclosure, the antenna port indication field in the DCI signaling indicates the Value in the DMRS port allocation table to determine the DMRS port corresponding to the RANK combination that implements the RANK layers.

Optionally, a quasi co-located relationship between the CDM groups is determined by a CDM group configuration signaling sent by the network side device.

In embodiments of the present disclosure, when the RANK of the transmission data layer corresponds to three CDM groups, in order to achieve the use of DMRS ports across CDM by a single Panel for transmission in one beam information indication direction, the network side needs to use the CDM group configuration signaling to ensure that two CDM groups are quasi co-located with each other, that is, the DMRS ports in the two CDM groups are quasi co-located with each other. As shown in FIG. 3 (A), there are three CDM groups. If the CDM group configuration signal indicates that the first CDM group and the second CDM group are quasi co-located with each other, the DMRS ports 0, 1, 2, and 3 are quasi co-located with each other, and the DMRS ports 4 and 5 are quasi co-located with each other. If the CDM group configuration signal indicates that the second CDM group and the third CDM group are quasi co-located with each other, the DMRS ports 0, 1 are quasi co-located with each other, and the DMRS ports 2,3,4,5 are quasi co-located with each other.

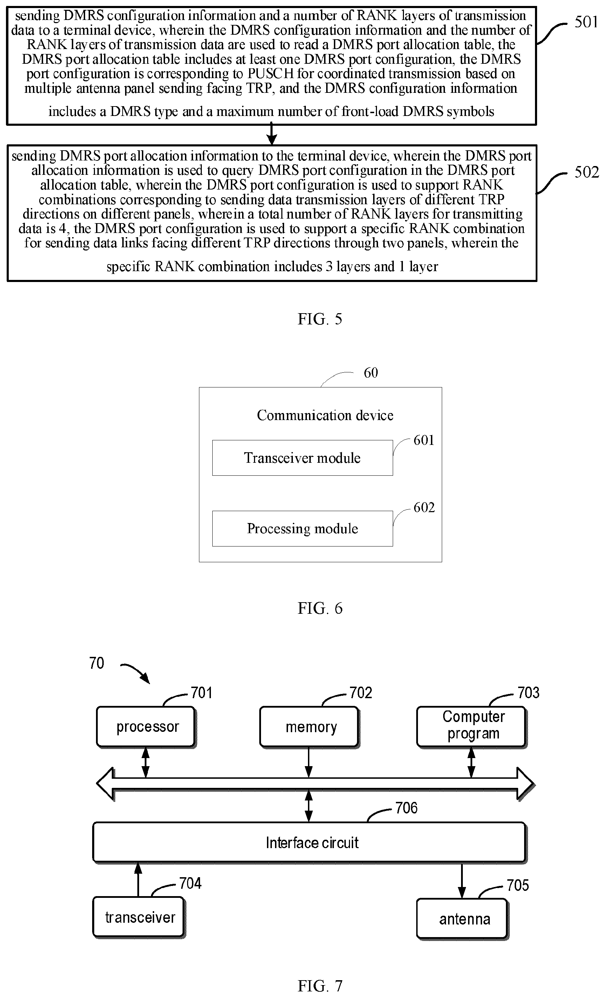

Please refer to FIG. 5, which is a schematic flowchart of a DMRS port allocation method for coordinated multiple antenna panel transmission provided in an embodiment of the present disclosure. The method is applied to a terminal device. As shown in FIG. 5, the method may include but is not limited to the following steps.

In step 501, DMRS configuration information and a number of transmission data RANK layers are sent to a terminal device, in which the DMRS configuration information and the number of transmission data RANK layers are used to read a DMRS port allocation table, the DMRS port allocation table includes at least one DMRS port configuration, the DMRS port configuration corresponds to PUSCH for coordinated transmission sent based on multiple antenna panel facing a TRP, and the DMRS configuration information includes a DMRS type and a maximum number of front-load DMRS symbols.

Int embodiments of the present disclosure, the network side device instructs the terminal device to read the DMRS port allocation table by sending DMRS configuration information and the number of RANK layers for data transmission. In the process of configuring the DMRS ports, it is necessary to determine the DMRS port allocation table to be queried based on the parameters sent by the network side device to instruct the terminal device to perform multi Panel or multi TRP communication. The DMRS configuration information and the number of RANK layers sent by the network side device can uniquely determine one DMRS port allocation table. The number of RANK layers refers to the number of layers used for transmitting data, which is equal to the total number of allocated DMRS ports.

In step 502, DMRS port allocation information is sent to the terminal device, in which the DMRS port allocation information is used to query DMRS port configuration in the DMRS port allocation table, in which the DMRS port configuration is used to support RANK combinations for sending data transmission layers of different TRP directions on different panels, in which a total number of RANK layers for data transmitting is 4, the DMRS port configuration is used to support a specific RANK combination for sending data links facing different TRP directions through two panels, in which the specific RANK combination includes 3 layers and 1 layer.

In embodiments of the present disclosure, in order to further determine the DMRS ports allocated for different RANK combinations of different panels in different beam directions, the network side device instructs the terminal device to query the specific DMRS port configuration in the DMRS port allocation table through the DMRS port allocation information.

In order to enable the Panel on the terminal device to send beams in different beam directions, or to send beams to different TRPs on the network side devices in different beam directions, it is necessary to allocate corresponding DMRS ports in different beam information indication directions, and it is necessary to ensure that DMRS ports allocated in different beam information indication directions are not co-located, and DMRS ports allocated in the same beam information indication direction are quasi co-located. As mentioned above, the DMRS ports within each CDM group are quasi co-located with each other, which means that it is necessary to allocate DMRS ports from different CDM groups to achieve RANK combination. The main purpose of this embodiment of the present disclosure is to support specific RANK combinations for sending data links facing different TRP directions through two panels when the total number of RANK layers for data transmission is 4. The specific RANK combination includes 3 layers and 1 layer, and the DCI signaling indicates that the total number of scheduled RANK layers for data transmission is 4.

By implementing the embodiments of the present disclosure, DMRS configuration information and downlink control information (DCI) signaling are sent to enable the terminal device to determine the DMRS port allocation corresponding to the RANK combination for sending data layers in different TRP directions on different panels, thereby improving communication reliability and efficiency and avoiding communication resource waste.

Optionally, the DMRS configuration information is indicated by a higher-layer signaling.

Optionally, the number of RANK layers for data transmission is carried in a downlink control information (DCI) signaling.

Optionally, the DMRS port allocation information is determined by an antenna port indication field in the DCI signaling.

In the above embodiments provided by the present disclosure, the methods provided by the embodiments are introduced from the perspectives of network side device and terminal device, respectively. In order to achieve the various functions in the methods provided in the embodiments of the present disclosure, the network side device and terminal device may include hardware structures and software modules, which can be implemented in the form of hardware structures, software modules, or a combination of hardware structures and software modules. One of the above functions can be executed in the form of hardware structure, software module, or a combination of hardware structure and software module.

Please refer to FIG. 6, which is block diagram of a communication apparatus 60 provided in an embodiment of the present disclosure. The communication apparatus shown in FIG. 6 may include a transceiver module 601 and a processing module 602. The transceiver module 601 may include a sending module and/or a receiving module. The sending module is used to implement the sending function, and the receiving module is used to implement the receiving function. The transceiver module 601 may implement the sending function and/or the receiving function.

The communication apparatus 60 may be a terminal device (such as the terminal device in the aforementioned method embodiments), a device within the terminal device, or a device that can be used in conjunction with the terminal device. Alternatively, the communication apparatus 60 may be a network side device, a device within the network side device, or a device that can be used in conjunction with the network side device.

The communication 60 is the terminal device, and includes:
a first transceiver module, configured to read a DMRS port allocation table based on DMRS configuration information and a number of transmission data RANK layers, in which the DMRS port allocation table includes at least one DMRS port configuration, the DMRS port configuration corresponds to PUSCH for coordinated transmission sent based on multiple antenna panel facing a TRP, and the DMRS configuration information includes a DMRS type and a maximum number of front-load DMRS symbols; and
an allocation module, configured to query the DMRS port allocation table according to DMRS port allocation information, to determine DMRS port configuration, in which the DMRS port configuration is used to support RANK combinations for sending data transmission layers of different TRP directions on different panels, in which a total number of RANK layers for data transmission is 4, the DMRS port configuration is used to support a specific RANK combination for sending data links facing different TRP directions through two panels, in which the specific RANK combination includes 3 layers and 1 layer.

The communication apparatus 60 is the network side device, and includes:
a second transceiver module, configured to send DMRS configuration information and a number of transmission data RANK layers to a terminal device, in which the DMRS configuration information and the number of transmission data RANK layers are used to read a DMRS port allocation table, the DMRS port allocation table includes at least one DMRS port configuration, the DMRS port configuration corresponds to PUSCH for coordinated transmission sent based on multiple antenna panel facing a TRP, and the DMRS configuration information includes a DMRS type and a maximum number of front-load DMRS symbols; and
a third transceiver module, configured to send DMRS port allocation information to the terminal device, in which the DMRS port allocation information is used to query DMRS port configuration in the DMRS port allocation table, in which the DMRS port configuration is used to support RANK combinations for sending data transmission layers of different TRP directions on different panels, in which a total number of RANK layers for data transmission is 4, the DMRS port configuration is used to support a specific RANK combination for sending data links facing different TRP directions through two panels, in which the specific RANK combination includes 3 layers and 1 layer.

Please refer to FIG. 7, which is a block diagram of another communication apparatus 70 provided in an embodiment of the present disclosure. The communication apparatus 70 may be a network side device, a terminal device (such as the terminal device in the aforementioned method embodiments), a chip, chip system, or processor that supports the network side device to implement the above method, or a chip, chip system, or processor that supports the terminal device to implement the above method. This device can be used to implement the methods described in the above method embodiments, which can be referred to in the description of the above method embodiments.

The communication apparatus 70 may include one or more processors 701. The processor 701 may be a general-purpose processor or a dedicated processor, etc. For example, it may be a baseband processor or a central processing unit. The baseband processor can be used to process communication protocols and communication data, while the central processor can be used to control communication apparatuses (such as base stations, baseband chips, terminal devices, terminal device chips, DU or CU, etc.), execute computer programs, and process data from computer programs.

Optionally, the communication apparatus 70 may also include one or more memories 702, on which computer programs 703 may be stored. The processor 701 executes the computer programs 703 to enable the communication apparatus 70 to perform the methods described in the above method embodiments. Optionally, the memory 702 may also store data. The communication apparatus 70 and memory 702 can be set separately or integrated together.

Optionally, the communication apparatus 70 may also include a transceiver 704 and an antenna 705. The transceiver 704 can be referred to as a transceiver unit, transceiver machine, or transceiver circuit, etc., used to achieve transceiver functions. The transceiver 704 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication apparatus 70 may also include one or more interface circuits 706. The interface circuit 706 is used to receive code instructions and transmit them to the processor 701. The processor 701 executes the code instructions to cause the communication apparatus 70 to perform the method described in the above method embodiments.

The communication apparatus 70 is a terminal device (such as the terminal device in the aforementioned method embodiments): the processor 701 is used to execute steps 401 and 402 shown in FIG. 4.

The communication apparatus 70 is a network side device: the transceiver 704 is used to perform steps 501 and 502 shown in FIG. 5.

In one implementation, the processor 701 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 701 may store a computer program 703 that runs on the processor 701 and enables the communication apparatus 70 to perform the method described in the above method embodiments. The computer program 703 may be fixed in the processor 701, in which case the processor 701 may be implemented by hardware.

In one implementation, the communication apparatus 70 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication apparatus described in the above embodiments may be a network device or a terminal device (such as the terminal device in the aforementioned method embodiments), but the scope of the communication apparatus described in this disclosure is not limited to this, and the structure of the communication apparatus may not be limited by FIG. 7. The communication apparatus may be a standalone device or a part of a larger device. For example, the communication apparatus may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

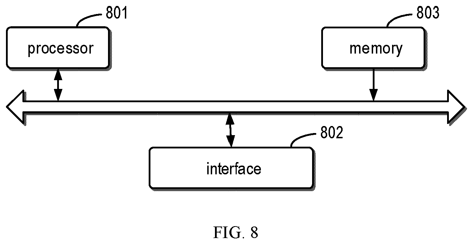

For the case where the communication apparatus can be a chip or a chip system, please refer to the schematic diagram of the chip structure shown in FIG. 8. The chip shown in FIG. 8 includes a processor 801 and an interface 802. The number of processors 801 may be one or more, and the number of interfaces 802 may be multiple.

Optionally, the chip also includes a memory 803 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

An embodiment of the present disclosure also provides a DMRS port allocation system for coordinated multiple antenna panel transmission, which includes a communication apparatus as a terminal device (such as the first terminal device in the aforementioned method embodiment) and a communication apparatus as a network device in the aforementioned embodiment, or the system includes a communication apparatus as a terminal device (such as the first terminal device in the aforementioned method embodiment) and a communication apparatus as a network device in the aforementioned embodiment.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The corresponding relationships shown in each table in this disclosure can be configured or predefined. The values of the information in each table are only examples and can be configured as other values, which are not limited in this application. When configuring the correspondence between information and various parameters, it is not necessarily required to configure all the corresponding relationships shown in each table. For example, in the table of this application, the corresponding relationships shown in certain rows may not be configured. For example, appropriate deformation adjustments can be made based on the above table, such as splitting, merging, and so on. The titles in the above tables indicate that the names of the parameters can also be other names that the communication apparatus can understand, and the values or representations of the parameters can also be other values or representations that the communication apparatus can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in advance, stored, pre-stored, pre-negotiated, pre-configured, solidified, or pre-fired.

Those skilled in the art will recognize that the units and algorithm steps described in the embodiments disclosed in this article can be implemented using electronic hardware, or a combination of computer software and electronic hardware. Whether these functions are executed in hardware or software depends on the specific application and design constraints of the technical solution. Professional technicians can use different methods to achieve the described functions for each specific application, but such implementation should not be considered beyond the scope of this application.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present application. Any skilled person familiar with the technical field can easily think of changes or replacements within the technical scope disclosed in the present application. The invention is defined by the appended claims.

## Claims

1. A demodulation reference signal, DMRS, port allocation method for coordinated multiple antenna panels transmission, performed by a terminal side device, comprising:
reading (401) a DMRS port allocation table based on DMRS configuration information and a number of transmission data RANK layers received from a network side device, wherein the DMRS port allocation table comprises at least one DMRS port configuration, the DMRS port configuration corresponds to a PUSCH for coordinated transmission sent based on multiple antenna panel facing a transmission reception point, TRP, and the DMRS configuration information comprises a DMRS type and a maximum number of front-load DMRS symbols; and
determining (402) a DMRS port configuration by querying the DMRS port allocation table according to DMRS port allocation information received from the network side device, wherein the DMRS port configuration supports RANK combinations for sending data transmission layers of different TRP directions on different panels, wherein a total number of transmission data RANK layers is 4, the DMRS port configuration supports a specific RANK combination for supporting sending data links facing different TRP directions through two panels, wherein the specific RANK combination comprises 3 layers and 1 layer; wherein the DMRS port allocation information is determined by an antenna port indication field in a DCI signaling, and the field indicates an index in the DMRS port allocation table;
wherein a transmission mode of PUSCH coordinated transmission sent through multiple panels facing multiple TRPs is spatial division multiplexing, SDM, mode, and
transmitting the PUSCH to the network side device according to the determined DMRS port configuration.

2. A demodulation reference signal, DMRS, port allocation method for coordinated multiple antenna panels transmission, performed by a network side device, comprising:
sending (501) DMRS configuration information and a number of transmission data RANK layers to a terminal device, wherein the DMRS configuration information and the number of transmission data RANK layers are used by the terminal device to read a DMRS port allocation table, the DMRS port allocation table comprises at least one DMRS port configuration, the DMRS port configuration corresponds to a PUSCH for coordinated transmission sent based on multiple antenna panel facing a transmission reception point, TRP, and the DMRS configuration information comprises a DMRS type and a maximum number of front-load DMRS symbols; and
sending (502) DMRS port allocation information to the terminal device, wherein the DMRS port allocation information is used to query by the terminal device DMRS port configuration in the DMRS port allocation table, wherein the DMRS port configuration supports RANK combinations for sending data transmission layers of different TRP directions on different panels, wherein a total number of transmission data RANK layers is 4, the DMRS port configuration supports a specific RANK combination for supporting sending data links facing different TRP directions through two panels, wherein the specific RANK combination comprises 3 layers and 1 layer; wherein the DMRS port allocation information is determined by an antenna port indication field in a DCI signaling, and the field indicates an index in the DMRS port allocation table;
wherein a transmission mode of PUSCH coordinated transmission sent through multiple panels facing multiple TRPs is spatial division multiplexing, SDM, mode; and
receiving the PUSCH from the terminal side device according to the DMRS configuration information and the DMRS port allocation.

3. The method of claim 1 or 2, wherein in a case that the DMRS type is 1 and the maximum number of front-load DMRS symbols is 2, the DMRS port configuration corresponding to the RANK combination of supporting 3 layers and 1 layer for sending data links facing different TRP directions through two panels is: DMRS port combination {0, 1, 2, 4},
wherein, the DMRS ports 0, 1, and 4 support that a number of data layers sent in a first beam information indication direction corresponds to the number of RANK layers of 3, the DMRS port 2 supports that a number of data layers sent in a second beam information indication direction corresponds to the number of RANK layers of 1, and the DMRS ports 0, 1, and 4 are quasi co-located.

4. The method of claim 1 or 2, wherein in a case that the DMRS type is 1 and the maximum number of front-load DMRS symbols is 2, the DMRS port configuration corresponding to the RANK combination of supporting 1 layer and 3 layers for sending data links facing different TRP directions through two panels is: DMRS port combination {0, 2, 3, 6},
wherein, the DMRS port 0 supports that a number of data layers sent in the first beam information indication direction corresponds to the number of RANK layers of 1, the DMRS ports 2, 3, 6 support that a number of data layers sent in the second beam information indication direction corresponds to the number of RANK layers of 3, and the DMRS ports 2, 3, and 6 are quasi co-located.

5. The method of claim 1 or 2, wherein in a case that the DMRS type is 2, the maximum number of front-load DMRS symbols is 1, the RANK occupies 3 code division multiplexing, CDM, groups, and the DMRS ports of a second CDM group and a third CDM group are quasi co-located, the DMRS port configuration corresponding to the RANK combination of supporting 1 layer and 3 layers for sending data links facing different TRP directions through two panels is at least one of the following:
DMRS port combination {0, 2, 3, 4},
DMRS port combination {0, 2, 4, 5},
DMRS port combination {0, 3, 4, 5};
wherein, in the DMRS port combination {0, 2, 3, 4}, the DMRS port 0 supports that a number of data layers sent in a first beam information indication direction corresponds to the number of RANK layers of 1, the DMRS ports 2, 3, 4 support that a number of data layers sent in a second beam information indication direction corresponds to the number of RANK layers of 3, and the DMRS ports 2, 3, and 4 are quasi co-located;
wherein, in the DMRS port combination {0, 2, 4, 5}, the DMRS port 0 supports that the number of data layers sent in the first beam information indication direction corresponds to the number of RANK layers of 1, the DMRS ports 2, 4, 5 support that the number of data layers sent in the second beam information indication direction corresponds to the number of RANK layers of 3, and the DMRS ports 2, 4, and 5 are quasi co-located;
wherein, in the DMRS port combination {0, 3, 4, 5}, the DMRS port 0 supports that the number of data layers sent in the first beam information indication direction corresponds to the number of RANK layers of 1, the DMRS ports 3, 4, 5 support that the number of data layers sent in the second beam information indication direction corresponds to the number of RANK layers of 3, and the DMRS ports 3, 4, 5 are quasi co-located.

6. The method of claim 1 or 2, wherein in a case that the DMRS type is 2, the maximum number of front-load DMRS symbols is 1, the RANK occupies 3 CDM groups, and DMRS ports of a first CDM group and a second CDM group are quasi co-located, the DMRS port configuration corresponding to the RANK combination of supporting 3 layers and 1 layer for sending data links facing different TRP directions through two panels is at least one of the following:
DMRS port combination {0, 1, 2, 4},
DMRS port combination {0, 1, 2, 5},
DMRS port combination {0, 2, 3, 4},
DMRS port combination {0, 2, 3, 5};
wherein, in the DMRS port combination {0, 1, 2, 4}, the DMRS ports 0, 1, 2 support that a number of data layers sent in a first beam information indication direction corresponds to the number of RANK layers of 3, the DMRS port 4 supports that a number of data layers sent in a second beam information indication direction corresponds to the number of RANK layers of 1, and the DMRS ports 0, 1, and 2 are quasi co-located;
wherein, in the DMRS port combination {0, 1, 2, 5}, the DMRS ports 0, 1, 2 support that the number of data layers sent in the first beam information indication direction corresponds to the number of RANK layers of 3, the DMRS port 5 supports that the number of data layers sent in the second beam information indication direction corresponds to the number of RANK layers of 1, and the DMRS ports 0, 1, and 2 are quasi co-located;
wherein, in the DMRS port combination {0, 2, 3, 4}, the DMRS ports 0, 2, 3 support that the number of data layers sent in the first beam information indication direction corresponds to the number of RANK layers of 3, the DMRS port 4 supports that the number of data layers sent in the second beam information indication direction corresponds to the number of RANK layers of 1, and the DMRS ports 0, 2, and 3 are quasi co-located;
wherein, in the DMRS port combination {0, 2, 3, 5}, the DMRS ports 0, 2, 3 support that the number of data layers sent in the first beam information indication direction corresponds to the number of RANK layers of 3, the DMRS port 5 supports that the number of data layers sent in the second beam information indication direction corresponds to the number of RANK layers of 1, and the DMRS ports 0, 2, and 3 are quasi co-located.

7. The method of claim 1 or 2, wherein in a case that the DMRS type is 2, the maximum number of front-load DMRS symbols is 2, and the RANK occupies 2 CDM groups, the DMRS port configuration corresponding to the RANK combination of supporting 1 layer and 3 layers for sending data links facing different TRP directions through two panels is at least one of the following:
DMRS port combination {0, 2, 3, 8},
DMRS port combination {0, 4, 5, 10};
wherein, in the DMRS port combination {0, 2, 3, 8}, the DMRS port 0 supports that a number of data layers sent in a first beam information indication direction corresponds to the number of RANK layers of 1, the DMRS ports 2, 3 and 8 support that a number of data layers sent in a second beam information indication direction corresponds to the number of RANK layers of 3, and the DMRS ports 2, 3, and 8 are quasi co-located;
wherein, in the DMRS port combination {0, 4, 5, 10}, the DMRS port 0 supports that the number of data layers sent in the first beam information indication direction corresponds to the number of RANK layers of 1, the DMRS ports 4, 5 and 10 support that the number of data layers sent in the second beam information indication direction corresponds to the number of RANK layers of 3, and the DMRS ports 4, 5, and 10 are quasi co-located.

8. The method of claim 1 or 2, wherein in a case that the DMRS type is 2, the maximum number of front-load DMRS symbols is 2, and the RANK occupies 2 CDM groups, the DMRS port configuration corresponding to the RANK combination of supporting 3 layers and 1 layer for sending data links facing different TRP directions through two panels is at least one of the following:
DMRS port combination {0, 1, 2, 6},
DMRS port combination {0, 1, 4, 6};
wherein, in the DMRS port combination {0, 1, 2, 6}, the DMRS ports 0, 1 and 6 support that a number of data layers sent in a first beam information indication direction corresponds to the number of RANK layers of 3, the DMRS port 2 supports that a number of data layers sent in a second beam information indication direction corresponds to the number of RANK layers of 1, and the DMRS ports 0, 1, and 6 are quasi co-located;
wherein, in the DMRS port combination {0, 1, 4, 6}, the DMRS ports 0, 1 and 6 support that the number of data layers sent in the first beam information indication direction corresponds to the number of RANK layers of 3, the DMRS port 4 supports that the number of data layers sent in the second beam information indication direction corresponds to the number of RANK layers of 1, and the DMRS ports 0, 1, and 6 are quasi co-located.

9. The method of claim 1 or 2, wherein in a case that the DMRS type is 2, the maximum number of front-load DMRS symbols is 2, the RANK occupies 3 CDM groups, and DMRS ports of a second CDM group and a third CDM group are quasi co-located, the DMRS port configuration corresponding to the RANK combination of supporting 1 layer and 3 layers for sending data links facing different TRP directions through two panels is at least one of the following:
DMRS port combination {0, 2, 3, 4},
DMRS port combination {0, 2, 4, 5};
wherein, in the DMRS port combination {0, 2, 3, 4}, the DMRS port 0 supports that a number of data layers sent in a first beam information indication direction corresponds to the number of RANK layers of 1, the DMRS ports 2, 3 and 4 support that a number of data layers sent in a second beam information indication direction corresponds to the number of RANK layers of 3, and the DMRS ports 2, 3, and 4 are quasi co-located;
wherein, in the DMRS port combination {0, 2, 4, 5}, the DMRS port 0 supports that the number of data layers sent in the first beam information indication direction corresponds to the number of RANK layers of 1, the DMRS ports 2, 4 and 5 support that the number of data layers sent in the second beam information indication direction corresponds to the number of RANK layers of 3, and the DMRS ports 2, 4, and 5 are quasi co-located.

10. The method of claim 1 or 2, wherein in a case that the DMRS type is 2, the maximum number of front-load DMRS symbols is 2, the RANK occupies 3 CDM groups, and DMRS ports of a first CDM group and a second CDM group are quasi co-located, the DMRS port configuration corresponding to the RANK combination of supporting 3 layers and 1 layer for sending data links facing different TRP directions through two panels is DMRS port combination {0, 1, 2, 4}, wherein the DMRS ports 0, 1 and 2 support that a number of data layers sent in a first beam information indication direction corresponds to the number of RANK layers of 3, the DMRS port 4 supports that a number of data layers sent in a second beam information indication direction corresponds to the number of RANK layers of 1, and the DMRS ports 0, 1 and 2 are quasi co-located.

11. The method of any of claims 3-10, wherein the first beam information indication direction or the second beam information indication direction is determined by uplink detection resource indication information, SRI, or uplink transmission configuration indication information, UL TCI; or
wherein the first beam information indication direction corresponds to a transmission beam direction of a first Panel on the terminal device or a transmission beam direction facing a first TRP of a network side device; the second beam information indication direction corresponds to a transmission beam direction of a second Panel on the terminal device or a transmission beam direction facing a second TRP of the network side device.

12. The method of any of claims 1-10, wherein
the DMRS configuration information is indicated through a higher-layer signaling; or
the number of transmission data RANK layers is indicated by a downlink control information, DCI, signaling; or
a quasi co-located relationship between CDM groups is determined by a CDM group configuration signaling sent by a network side device.

13. A terminal device, comprising:
a first transceiver module, configured to read a DMRS port allocation table based on DMRS configuration information and a number of transmission data RANK layers received from a network side device, wherein the DMRS port allocation table comprises at least one DMRS port configuration, the DMRS port configuration corresponds to a PUSCH for coordinated transmission sent based on multiple antenna panel facing a transmission reception point, TRP, and the DMRS configuration information comprises a DMRS type and a maximum number of front-load DMRS symbols; and
an allocation module, configured to determine a DMRS port configuration by querying the DMRS port allocation table according to DMRS port allocation information received from the network side device, wherein the DMRS port configuration supports RANK combinations for sending data transmission layers of different TRP directions on different panels, wherein a total number of transmission data RANK layers is 4, the DMRS port configuration supports a specific RANK combination for supporting sending data links facing different TRP directions through two panels, wherein the specific RANK combination comprises 3 layers and 1 layer; wherein the DMRS port allocation information is determined by an antenna port indication field in a DCI signaling, and the field indicates an index in the DMRS port allocation table;
wherein a transmission mode of PUSCH coordinated transmission sent through multiple panels facing multiple TRPs is spatial division multiplexing, SDM, mode, and
a transceiver module, configured to transmit the PUSCH to the network side device according to the determined DMRS port configuration.

14. A network side device, comprising:
a second transceiver module, configured to send DMRS configuration information and a number of transmission data RANK layers to a terminal device, wherein the DMRS configuration information and the number of transmission data RANK layers are used by the terminal device to read a DMRS port allocation table, the DMRS port allocation table comprises at least one DMRS port configuration, the DMRS port configuration corresponds to a PUSCH for coordinated transmission sent based on multiple antenna panel facing a transmission reception pair, TRP, and the DMRS configuration information comprises a DMRS type and a maximum number of front-load DMRS symbols; and
a third transceiver module, configured to send DMRS port allocation information to the terminal device, wherein the DMRS port allocation information is used by the terminal device to query DMRS port configuration in the DMRS port allocation table, wherein the DMRS port configuration supports RANK combinations for sending data transmission layers of different TRP directions on different panels, wherein a total number of transmission data RANK layers is 4, the DMRS port configuration supports a specific RANK combination for supporting sending data links facing different TRP directions through two panels, wherein the specific RANK combination comprises 3 layers and 1 layer; wherein the DMRS port allocation information is determined by an antenna port indication field in a DCI signaling, and the field indicates an index in the DMRS port allocation table;
wherein a transmission mode of PUSCH coordinated transmission sent through multiple panels facing multiple TRPs is spatial division multiplexing, SDM, mode; and
a transceiver module, configured to receive the PUSCH from the terminal side device according to the DMRS configuration information and the DMRS port allocation.

## Patentansprüche

1. Ein Demodulationsreferenzsignal, DMRS, -Portzuweisungsverfahren für eine koordinierte Mehrfach-Antennenpanel-Sendung, durchgeführt durch eine endgeräteseitige Vorrichtung, umfassend:
Lesen (401) einer DMRS-Portzuweisungstabelle basierend auf DMRS-Konfigurationsinformationen und einer Anzahl von Sendedaten-RANK-Schichten, die von einer netzwerkseitigen Vorrichtung empfangen werden, wobei die DMRS-Portzuweisungstabelle mindestens eine DMRS-Portkonfiguration umfasst, die DMRS-Portkonfiguration einem PUSCH für eine koordinierte Sendung entspricht, der basierend auf mehreren Antennenpanels gesendet wird, die einem Sendeempfangspunkt, TRP, zugewandt sind, und die DMRS-Konfigurationsinformationen einen DMRS-Typ und eine maximale Anzahl von Front-Load-DMRS-Symbolen umfassen; und
Bestimmen (402) einer DMRS-Portkonfiguration durch Abfragen der DMRS-Portzuweisungstabelle gemäß DMRS-Portzuweisungsinformationen, die von der netzwerkseitigen Vorrichtung empfangen werden, wobei die DMRS-Portkonfiguration RANK-Kombinationen zum Senden von Datensendeschichten verschiedener TRP-Richtungen auf verschiedenen Panels unterstützt, wobei eine Gesamtanzahl von Sendedaten-RANK-Schichten 4 ist, die DMRS-Portkonfiguration eine spezifische RANK-Kombination zum Unterstützen eines Sendens von Datenverbindungen, die verschiedenen TRP-Richtungen zugewandt sind, durch zwei Panels unterstützt, wobei die spezifische RANK-Kombination 3 Schichten und 1 Schicht umfasst; wobei die DMRS-Portzuweisungsinformationen durch ein Antennenport-Anzeigefeld in einer DCI-Signalisierung bestimmt werden und das Feld einen Index in der DMRS-Portzuweisungstabelle angibt;
wobei ein Sendemodus der PUSCH-koordinierten Sendung, die durch mehrere Panels gesendet wird, die mehreren TRPs zugewandt sind, ein Spatial-Division-Multiplexing, SDM, - Modus ist, und Senden des PUSCH an die netzwerkseitige Vorrichtung gemäß der bestimmten DMRS-Portkonfiguration.

2. Ein Demodulationsreferenzsignal, DMRS, -Portzuweisungsverfahren für eine koordinierte Mehrfach-Antennenpanel-Sendung, durchgeführt durch eine netzwerkseitige Vorrichtung, umfassend:
Senden (501) von DMRS-Konfigurationsinformationen und einer Anzahl von Sendedaten-RANK-Schichten an ein Endgerät, wobei die DMRS-Konfigurationsinformationen und die Anzahl von Sendedaten-RANK-Schichten durch das Endgerät verwendet werden, um eine DMRS-Portzuweisungstabelle zu lesen, die DMRS-Portzuweisungstabelle mindestens eine DMRS-Portkonfiguration umfasst, die DMRS-Portkonfiguration einem PUSCH für eine koordinierte Sendung entspricht, der basierend auf mehreren Antennenpanels gesendet wird, die einem Sendeempfangspunkt, TRP, zugewandt sind, und die DMRS-Konfigurationsinformationen einen DMRS-Typ und eine maximale Anzahl von Front-Load-DMRS-Symbolen umfassen; und
Senden (502) von DMRS-Portzuweisungsinformationen an das Endgerät, wobei die DMRS-Portzuweisungsinformationen verwendet werden, um durch das Endgerät eine DMRS-Portkonfiguration in der DMRS-Portzuweisungstabelle abzufragen, wobei die DMRS-Portkonfiguration RANK-Kombinationen zum Senden von Datensendeschichten verschiedener TRP-Richtungen auf verschiedenen Panels unterstützt, wobei eine Gesamtanzahl von Sendedaten-RANK-Schichten 4 ist, die DMRS-Portkonfiguration eine spezifische RANK-Kombination zum Unterstützen eines Sendens von Datenverbindungen, die verschiedenen TRP-Richtungen zugewandt sind, durch zwei Panels unterstützt, wobei die spezifische RANK-Kombination 3 Schichten und 1 Schicht umfasst; wobei die DMRS-Portzuweisungsinformationen durch ein Antennenport-Anzeigefeld in einer DCI-Signalisierung bestimmt werden und das Feld einen Index in der DMRS-Portzuweisungstabelle angibt;
wobei ein Sendemodus der PUSCH-koordinierten Sendung, die durch mehrere Panels gesendet wird, die mehreren TRPs zugewandt sind, ein Spatial-Division-Multiplexing, SDM, - Modus ist, und Empfangen des PUSCH von der endgeräteseitigen Vorrichtung gemäß den DMRS-Konfigurationsinformationen und der DMRS-Portzuweisung.

3. Das Verfahren nach Anspruch 1 oder 2, wobei in einem Fall, dass der DMRS-Typ 1 ist und die maximale Anzahl von Front-Load-DMRS-Symbolen 2 ist, die DMRS-Portkonfiguration, die der RANK-Kombination zum Unterstützen von 3 Schichten und 1 Schicht zum Senden von Datenverbindungen entspricht, die verschiedenen TRP-Richtungen zugewandt sind, durch zwei Panels ist: DMRS-Portkombination {0, 1, 2, 4},
wobei die DMRS-Ports 0, 1 und 4 unterstützen, dass eine Anzahl von Datenschichten, die in einer ersten Strahlinformations-Anzeigerichtung gesendet werden, der Anzahl von RANK-Schichten von 3 entspricht, der DMRS-Port 2 unterstützt, dass eine Anzahl von Datenschichten, die in einer zweiten Strahlinformations-Anzeigerichtung gesendet werden, der Anzahl von RANK-Schichten von 1 entspricht, und die DMRS-Ports 0, 1 und 4 quasi-kolokalisiert sind.

4. Das Verfahren nach Anspruch 1 oder 2, wobei in einem Fall, dass der DMRS-Typ 1 ist und die maximale Anzahl von Front-Load-DMRS-Symbolen 2 ist, die DMRS-Portkonfiguration, die der RANK-Kombination zum Unterstützen von 1 Schicht und 3 Schichten zum Senden von Datenverbindungen entspricht, die verschiedenen TRP-Richtungen zugewandt sind, durch zwei Panels ist: DMRS-Portkombination {0, 2, 3, 6},
wobei der DMRS-Port 0 unterstützt, dass eine Anzahl von Datenschichten, die in der ersten Strahlinformations-Anzeigerichtung gesendet werden, der Anzahl von RANK-Schichten von 1 entspricht, die DMRS-Ports 2, 3, 6 unterstützen, dass eine Anzahl von Datenschichten, die in der zweiten Strahlinformations-Anzeigerichtung gesendet werden, der Anzahl von RANK-Schichten von 3 entspricht, und die DMRS-Ports 2, 3 und 6 quasi-kolokalisiert sind.

5. Das Verfahren nach Anspruch 1 oder 2, wobei in einem Fall, dass der DMRS-Typ 2 ist, die maximale Anzahl von Front-Load-DMRS-Symbolen 1 ist, der RANK 3 Code-Division-Multiplexing, CDM, -Gruppen belegt und die DMRS-Ports einer zweiten CDM-Gruppe und einer dritten CDM-Gruppe quasi-kolokalisiert sind, die DMRS-Portkonfiguration, die der RANK-Kombination zum Unterstützen von 1 Schicht und 3 Schichten zum Senden von Datenverbindungen entspricht, die verschiedenen TRP-Richtungen zugewandt sind, durch zwei Panels mindestens eine der folgenden ist:
DMRS-Portkombination {0, 2, 3, 4},
DMRS-Portkombination {0, 2, 4, 5},
DMRS-Portkombination {0, 3, 4, 5};
wobei in der DMRS-Portkombination {0, 2, 3, 4} der DMRS-Port 0 unterstützt, dass eine Anzahl von Datenschichten, die in einer ersten Strahlinformations-Anzeigerichtung gesendet werden, der Anzahl von RANK-Schichten von 1 entspricht, die DMRS-Ports 2, 3, 4 unterstützen, dass eine Anzahl von Datenschichten, die in einer zweiten Strahlinformations-Anzeigerichtung gesendet werden, der Anzahl von RANK-Schichten von 3 entspricht, und die DMRS-Ports 2, 3 und 4 quasi-kolokalisiert sind;
wobei in der DMRS-Portkombination {0, 2, 4, 5} der DMRS-Port 0 unterstützt, dass die Anzahl von Datenschichten, die in der ersten Strahlinformations-Anzeigerichtung gesendet werden, der Anzahl von RANK-Schichten von 1 entspricht, die DMRS-Ports 2, 4, 5 unterstützen, dass die Anzahl von Datenschichten, die in der zweiten Strahlinformations-Anzeigerichtung gesendet werden, der Anzahl von RANK-Schichten von 3 entspricht, und die DMRS-Ports 2, 4 und 5 quasi-kolokalisiert sind;
wobei in der DMRS-Portkombination {0, 3, 4, 5} der DMRS-Port 0 unterstützt, dass die Anzahl von Datenschichten, die in der ersten Strahlinformations-Anzeigerichtung gesendet werden, der Anzahl von RANK-Schichten von 1 entspricht, die DMRS-Ports 3, 4, 5 unterstützen, dass die Anzahl von Datenschichten, die in der zweiten Strahlinformations-Anzeigerichtung gesendet werden, der Anzahl von RANK-Schichten von 3 entspricht, und die DMRS-Ports 3, 4, 5 quasi-kolokalisiert sind.

6. Das Verfahren nach Anspruch 1 oder 2, wobei in einem Fall, dass der DMRS-Typ 2 ist, die maximale Anzahl von Front-Load-DMRS-Symbolen 1 ist, der RANK 3 CDM-Gruppen belegt und DMRS-Ports einer ersten CDM-Gruppe und einer zweiten CDM-Gruppe quasi-kolokalisiert sind, die DMRS-Portkonfiguration, die der RANK-Kombination zum Unterstützen von 3 Schichten und 1 Schicht zum Senden von Datenverbindungen entspricht, die verschiedenen TRP-Richtungen zugewandt sind, durch zwei Panels mindestens eine der folgenden ist:
DMRS-Portkombination {0, 1, 2, 4},
DMRS-Portkombination {0, 1, 2, 5},
DMRS-Portkombination {0, 2, 3, 4},
DMRS-Portkombination {0, 2, 3, 5};
wobei in der DMRS-Portkombination {0, 1, 2, 4} die DMRS-Ports 0, 1, 2 unterstützen, dass eine Anzahl von Datenschichten, die in einer ersten Strahlinformations-Anzeigerichtung gesendet werden, der Anzahl von RANK-Schichten von 3 entspricht, der DMRS-Port 4 unterstützt, dass eine Anzahl von Datenschichten, die in einer zweiten Strahlinformations-Anzeigerichtung gesendet werden, der Anzahl von RANK-Schichten von 1 entspricht, und die DMRS-Ports 0, 1 und 2 quasi-kolokalisiert sind;
wobei in der DMRS-Portkombination {0, 1, 2, 5} die DMRS-Ports 0, 1, 2 unterstützen, dass die Anzahl von Datenschichten, die in der ersten Strahlinformations-Anzeigerichtung gesendet werden, der Anzahl von RANK-Schichten von 3 entspricht, der DMRS-Port 5 unterstützt, dass die Anzahl von Datenschichten, die in der zweiten Strahlinformations-Anzeigerichtung gesendet werden, der Anzahl von RANK-Schichten von 1 entspricht, und die DMRS-Ports 0, 1 und 2 quasi-kolokalisiert sind;
wobei in der DMRS-Portkombination {0, 2, 3, 4} die DMRS-Ports 0, 2, 3 unterstützen, dass die Anzahl von Datenschichten, die in der ersten Strahlinformations-Anzeigerichtung gesendet werden, der Anzahl von RANK-Schichten von 3 entspricht, der DMRS-Port 4 unterstützt, dass die Anzahl von Datenschichten, die in der zweiten Strahlinformations-Anzeigerichtung gesendet werden, der Anzahl von RANK-Schichten von 1 entspricht, und die DMRS-Ports 0, 2 und 3 quasi-kolokalisiert sind;
wobei in der DMRS-Portkombination {0, 2, 3, 5} die DMRS-Ports 0, 2, 3 unterstützen, dass die Anzahl von Datenschichten, die in der ersten Strahlinformations-Anzeigerichtung gesendet werden, der Anzahl von RANK-Schichten von 3 entspricht, der DMRS-Port 5 unterstützt, dass die Anzahl von Datenschichten, die in der zweiten Strahlinformations-Anzeigerichtung gesendet werden, der Anzahl von RANK-Schichten von 1 entspricht, und die DMRS-Ports 0, 2 und 3 quasi-kolokalisiert sind.

7. Das Verfahren nach Anspruch 1 oder 2, wobei in einem Fall, dass der DMRS-Typ 2 ist, die maximale Anzahl von Front-Load-DMRS-Symbolen 2 ist und der RANK 2 CDM-Gruppen belegt, die DMRS-Portkonfiguration, die der RANK-Kombination zum Unterstützen von 1 Schicht und 3 Schichten zum Senden von Datenverbindungen entspricht, die verschiedenen TRP-Richtungen zugewandt sind, durch zwei Panels mindestens eine der folgenden ist:
DMRS-Portkombination {0, 2, 3, 8},
DMRS-Portkombination {0, 4, 5, 10};
wobei in der DMRS-Portkombination {0, 2, 3, 8} der DMRS-Port 0 unterstützt, dass eine Anzahl von Datenschichten, die in einer ersten Strahlinformations-Anzeigerichtung gesendet werden, der Anzahl von RANK-Schichten von 1 entspricht, die DMRS-Ports 2, 3 und 8 unterstützen, dass eine Anzahl von Datenschichten, die in einer zweiten Strahlinformations-Anzeigerichtung gesendet werden, der Anzahl von RANK-Schichten von 3 entspricht, und die DMRS-Ports 2, 3 und 8 quasi-kolokalisiert sind;
wobei in der DMRS-Portkombination {0, 4, 5, 10} der DMRS-Port 0 unterstützt, dass die Anzahl von Datenschichten, die in der ersten Strahlinformations-Anzeigerichtung gesendet werden, der Anzahl von RANK-Schichten von 1 entspricht, die DMRS-Ports 4, 5 und 10 unterstützen, dass die Anzahl von Datenschichten, die in der zweiten Strahlinformations-Anzeigerichtung gesendet werden, der Anzahl von RANK-Schichten von 3 entspricht, und die DMRS-Ports 4, 5 und 10 quasi-kolokalisiert sind.

8. Das Verfahren nach Anspruch 1 oder 2, wobei in einem Fall, dass der DMRS-Typ 2 ist, die maximale Anzahl von Front-Load-DMRS-Symbolen 2 ist und der RANK 2 CDM-Gruppen belegt, die DMRS-Portkonfiguration, die der RANK-Kombination zum Unterstützen von 3 Schichten und 1 Schicht zum Senden von Datenverbindungen entspricht, die verschiedenen TRP-Richtungen zugewandt sind, durch zwei Panels mindestens eine der folgenden ist:
DMRS-Portkombination {0, 1, 2, 6},
DMRS-Portkombination {0, 1, 4, 6};
wobei in der DMRS-Portkombination {0, 1, 2, 6} die DMRS-Ports 0, 1 und 6 unterstützen, dass eine Anzahl von Datenschichten, die in einer ersten Strahlinformations-Anzeigerichtung gesendet werden, der Anzahl von RANK-Schichten von 3 entspricht, der DMRS-Port 2 unterstützt, dass eine Anzahl von Datenschichten, die in einer zweiten Strahlinformations-Anzeigerichtung gesendet werden, der Anzahl von RANK-Schichten von 1 entspricht, und die DMRS-Ports 0, 1 und 6 quasi-kolokalisiert sind;
wobei in der DMRS-Portkombination {0, 1, 4, 6} die DMRS-Ports 0, 1 und 6 unterstützen, dass die Anzahl von Datenschichten, die in der ersten Strahlinformations-Anzeigerichtung gesendet werden, der Anzahl von RANK-Schichten von 3 entspricht, der DMRS-Port 4 unterstützt, dass die Anzahl von Datenschichten, die in der zweiten Strahlinformations-Anzeigerichtung gesendet werden, der Anzahl von RANK-Schichten von 1 entspricht, und die DMRS-Ports 0, 1 und 6 quasi-kolokalisiert sind.

9. Das Verfahren nach Anspruch 1 oder 2, wobei in einem Fall, dass der DMRS-Typ 2 ist, die maximale Anzahl von Front-Load-DMRS-Symbolen 2 ist, der RANK 3 CDM-Gruppen belegt und DMRS-Ports einer zweiten CDM-Gruppe und einer dritten CDM-Gruppe quasi-kolokalisiert sind, die DMRS-Portkonfiguration, die der RANK-Kombination zum Unterstützen von 1 Schicht und 3 Schichten zum Senden von Datenverbindungen entspricht, die verschiedenen TRP-Richtungen zugewandt sind, durch zwei Panels mindestens eine der folgenden ist:
DMRS-Portkombination {0, 2, 3, 4},
DMRS-Portkombination {0, 2, 4, 5};
wobei in der DMRS-Portkombination {0, 2, 3, 4} der DMRS-Port 0 unterstützt, dass eine Anzahl von Datenschichten, die in einer ersten Strahlinformations-Anzeigerichtung gesendet werden, der Anzahl von RANK-Schichten von 1 entspricht, die DMRS-Ports 2, 3 und 4 unterstützen, dass eine Anzahl von Datenschichten, die in einer zweiten Strahlinformations-Anzeigerichtung gesendet werden, der Anzahl von RANK-Schichten von 3 entspricht, und die DMRS-Ports 2, 3 und 4 quasi-kolokalisiert sind;
wobei in der DMRS-Portkombination {0, 2, 4, 5} der DMRS-Port 0 unterstützt, dass die Anzahl von Datenschichten, die in der ersten Strahlinformations-Anzeigerichtung gesendet werden, der Anzahl von RANK-Schichten von 1 entspricht, die DMRS-Ports 2, 4 und 5 unterstützen, dass die Anzahl von Datenschichten, die in der zweiten Strahlinformations-Anzeigerichtung gesendet werden, der Anzahl von RANK-Schichten von 3 entspricht, und die DMRS-Ports 2, 4 und 5 quasi-kolokalisiert sind.

10. Das Verfahren nach Anspruch 1 oder 2, wobei in einem Fall, dass der DMRS-Typ 2 ist, die maximale Anzahl von Front-Load-DMRS-Symbolen 2 ist, der RANK 3 CDM-Gruppen belegt und DMRS-Ports einer ersten CDM-Gruppe und einer zweiten CDM-Gruppe quasi-kolokalisiert sind, die DMRS-Portkonfiguration, die der RANK-Kombination zum Unterstützen von 3 Schichten und 1 Schicht zum Senden von Datenverbindungen entspricht, die verschiedenen TRP-Richtungen zugewandt sind, durch zwei Panels die DMRS-Portkombination {0, 1, 2, 4} ist, wobei die DMRS-Ports 0, 1 und 2 unterstützen, dass eine Anzahl von Datenschichten, die in einer ersten Strahlinformations-Anzeigerichtung gesendet werden, der Anzahl von RANK-Schichten von 3 entspricht, der DMRS-Port 4 unterstützt, dass eine Anzahl von Datenschichten, die in einer zweiten Strahlinformations-Anzeigerichtung gesendet werden, der Anzahl von RANK-Schichten von 1 entspricht, und die DMRS-Ports 0, 1 und 2 quasi-kolokalisiert sind.

11. Das Verfahren nach einem der Ansprüche 3-10, wobei die erste Strahlinformations-Anzeigerichtung oder die zweite Strahlinformations-Anzeigerichtung durch Uplink-Detektionsressourcen-Anzeigeinformationen, SRI, oder Uplink-Sendekonfigurations-Anzeigeinformationen, UL TCI, bestimmt wird; oder
wobei die erste Strahlinformations-Anzeigerichtung einer Sendestrahlrichtung eines ersten Panels an dem Endgerät oder einer Sendestrahlrichtung entspricht, die einem ersten TRP einer netzwerkseitigen Vorrichtung zugewandt ist; die zweite Strahlinformations-Anzeigerichtung einer Sendestrahlrichtung eines zweiten Panels an dem Endgerät oder einer Sendestrahlrichtung entspricht, die einem zweiten TRP der netzwerkseitigen Vorrichtung zugewandt ist.

12. Das Verfahren nach einem der Ansprüche 1-10, wobei
die DMRS-Konfigurationsinformationen durch eine Höhere-Schicht-Signalisierung angegeben werden; oder
die Anzahl von Sendedaten-RANK-Schichten durch eine Downlink-Steuerinformationen, DCI, -Signalisierung angegeben wird; oder
eine quasi-kolokalisierte Beziehung zwischen CDM-Gruppen durch eine CDM-Gruppenkonfigurationssignalisierung bestimmt wird, die durch eine netzwerkseitige Vorrichtung gesendet wird.

13. Ein Endgerät, umfassend:
ein erstes Sendeempfängermodul, das konfiguriert ist, um eine DMRS-Portzuweisungstabelle basierend auf DMRS-Konfigurationsinformationen und einer Anzahl von Sendedaten-RANK-Schichten zu lesen, die von einer netzwerkseitigen Vorrichtung empfangen werden, wobei die DMRS-Portzuweisungstabelle mindestens eine DMRS-Portkonfiguration umfasst, die DMRS-Portkonfiguration einem PUSCH für eine koordinierte Sendung entspricht, der basierend auf mehreren Antennenpanels gesendet wird, die einem Sendeempfangspunkt, TRP, zugewandt sind, und die DMRS-Konfigurationsinformationen einen DMRS-Typ und eine maximale Anzahl von Front-Load-DMRS-Symbolen umfassen; und
ein Zuweisungsmodul, das konfiguriert ist, um eine DMRS-Portkonfiguration durch Abfragen der DMRS-Portzuweisungstabelle gemäß DMRS-Portzuweisungsinformationen zu bestimmen, die von der netzwerkseitigen Vorrichtung empfangen werden, wobei die DMRS-Portkonfiguration RANK-Kombinationen zum Senden von Datensendeschichten verschiedener TRP-Richtungen auf verschiedenen Panels unterstützt, wobei eine Gesamtanzahl von Sendedaten-RANK-Schichten 4 ist, die DMRS-Portkonfiguration eine spezifische RANK-Kombination zum Unterstützen eines Sendens von Datenverbindungen, die verschiedenen TRP-Richtungen zugewandt sind, durch zwei Panels unterstützt, wobei die spezifische RANK-Kombination 3 Schichten und 1 Schicht umfasst; wobei die DMRS-Portzuweisungsinformationen durch ein Antennenport-Anzeigefeld in einer DCI-Signalisierung bestimmt werden und das Feld einen Index in der DMRS-Portzuweisungstabelle angibt;
wobei ein Sendemodus der PUSCH-koordinierten Sendung, die durch mehrere Panels gesendet wird, die mehreren TRPs zugewandt sind, ein Spatial-Division-Multiplexing, SDM, - Modus ist, und ein Sendeempfängermodul, das konfiguriert ist, um den PUSCH an die netzwerkseitige Vorrichtung gemäß der bestimmten DMRS-Portkonfiguration zu senden.

14. Eine netzwerkseitige Vorrichtung, umfassend:
ein zweites Sendeempfängermodul, das konfiguriert ist, um DMRS-Konfigurationsinformationen und eine Anzahl von Sendedaten-RANK-Schichten an ein Endgerät zu senden, wobei die DMRS-Konfigurationsinformationen und die Anzahl von Sendedaten-RANK-Schichten durch das Endgerät verwendet werden, um eine DMRS-Portzuweisungstabelle zu lesen, die DMRS-Portzuweisungstabelle mindestens eine DMRS-Portkonfiguration umfasst, die DMRS-Portkonfiguration einem PUSCH für eine koordinierte Sendung entspricht, der basierend auf mehreren Antennenpanels gesendet wird, die einem Sendeempfangspaar, TRP, zugewandt sind, und die DMRS-Konfigurationsinformationen einen DMRS-Typ und eine maximale Anzahl von Front-Load-DMRS-Symbolen umfassen; und
ein drittes Sendeempfängermodul, das konfiguriert ist, um DMRS-Portzuweisungsinformationen an das Endgerät zu senden, wobei die DMRS-Portzuweisungsinformationen durch das Endgerät verwendet werden, um eine DMRS-Portkonfiguration in der DMRS-Portzuweisungstabelle abzufragen, wobei die DMRS-Portkonfiguration RANK-Kombinationen zum Senden von Datensendeschichten verschiedener TRP-Richtungen auf verschiedenen Panels unterstützt, wobei eine Gesamtanzahl von Sendedaten-RANK-Schichten 4 ist, die DMRS-Portkonfiguration eine spezifische RANK-Kombination zum Unterstützen eines Sendens von Datenverbindungen, die verschiedenen TRP-Richtungen zugewandt sind, durch zwei Panels unterstützt, wobei die spezifische RANK-Kombination 3 Schichten und 1 Schicht umfasst; wobei die DMRS-Portzuweisungsinformationen durch ein Antennenport-Anzeigefeld in einer DCI-Signalisierung bestimmt werden und das Feld einen Index in der DMRS-Portzuweisungstabelle angibt;
wobei ein Sendemodus der PUSCH-koordinierten Sendung, die durch mehrere Panels gesendet wird, die mehreren TRPs zugewandt sind, ein Spatial-Division-Multiplexing, SDM, - Modus ist, und ein Sendeempfängermodul, das konfiguriert ist, um den PUSCH von der endgeräteseitigen Vorrichtung gemäß den DMRS-Konfigurationsinformationen und der DMRS-Portzuweisung zu empfangen.

## Revendications

1. Procédé d'allocation de ports de signal de référence de démodulation, DMRS, pour une transmission coordonnée par multiples panneaux d'antenne, réalisé par un dispositif côté terminal, comprenant :
lire (401) une table d'allocation de ports DMRS sur la base d'informations de configuration DMRS et d'un nombre de couches de RANK de données de transmission reçues depuis un dispositif côté réseau, dans lequel la table d'allocation de ports DMRS comprend au moins une configuration de ports DMRS, la configuration de ports DMRS correspond à un PUSCH pour une transmission coordonnée envoyé sur la base de multiples panneaux d'antenne faisant face à un point de transmission-réception, TRP, et les informations de configuration DMRS comprennent un type de DMRS et un nombre maximal de symboles DMRS à chargement frontal ; et
déterminer (402) une configuration de ports DMRS en interrogeant la table d'allocation de ports DMRS selon des informations d'allocation de ports DMRS reçues depuis le dispositif côté réseau, dans lequel la configuration de ports DMRS prend en charge des combinaisons de RANK pour envoyer des couches de transmission de données de directions de TRP différentes sur différents panneaux, dans lequel un nombre total de couches de RANK de données de transmission est 4, la configuration de ports DMRS prend en charge une combinaison de RANK spécifique pour prendre en charge l'envoi de liaisons de données faisant face à différentes directions de TRP à travers deux panneaux, dans lequel la combinaison de RANK spécifique comprend 3 couches et 1 couche ; dans lequel les informations d'allocation de ports DMRS sont déterminées par un champ d'indication de port d'antenne dans une signalisation DCI, et le champ indique un indice dans la table d'allocation de ports DMRS ;
dans lequel un mode de transmission de transmission coordonnée PUSCH envoyée à travers multiples panneaux faisant face à multiples TRP est un mode de multiplexage par répartition spatiale, SDM, et transmettre le PUSCH au dispositif côté réseau selon la configuration de ports DMRS déterminée.

2. Procédé d'allocation de ports de signal de référence de démodulation, DMRS, pour une transmission coordonnée par multiples panneaux d'antenne, réalisé par un dispositif côté réseau, comprenant :
envoyer (501) des informations de configuration DMRS et un nombre de couches de RANK de données de transmission à un dispositif terminal, dans lequel les informations de configuration DMRS et le nombre de couches de RANK de données de transmission sont utilisés par le dispositif terminal pour lire une table d'allocation de ports DMRS, la table d'allocation de ports DMRS comprend au moins une configuration de ports DMRS, la configuration de ports DMRS correspond à un PUSCH pour une transmission coordonnée envoyé sur la base de multiples panneaux d'antenne faisant face à un point de transmission-réception, TRP, et les informations de configuration DMRS comprennent un type de DMRS et un nombre maximal de symboles DMRS à chargement frontal ; et
envoyer (502) des informations d'allocation de ports DMRS au dispositif terminal, dans lequel les informations d'allocation de ports DMRS sont utilisées pour interroger, par le dispositif terminal, une configuration de ports DMRS dans la table d'allocation de ports DMRS, dans lequel la configuration de ports DMRS prend en charge des combinaisons de RANK pour envoyer des couches de transmission de données de directions de TRP différentes sur différents panneaux, dans lequel un nombre total de couches de RANK de données de transmission est 4, la configuration de ports DMRS prend en charge une combinaison de RANK spécifique pour prendre en charge l'envoi de liaisons de données faisant face à différentes directions de TRP à travers deux panneaux, dans lequel la combinaison de RANK spécifique comprend 3 couches et 1 couche ; dans lequel les informations d'allocation de ports DMRS sont déterminées par un champ d'indication de port d'antenne dans une signalisation DCI, et le champ indique un indice dans la table d'allocation de ports DMRS ;
dans lequel un mode de transmission de transmission coordonnée PUSCH envoyée à travers multiples panneaux faisant face à multiples TRP est un mode de multiplexage par répartition spatiale, SDM, et recevoir le PUSCH depuis le dispositif côté terminal selon les informations de configuration DMRS et l'allocation de ports DMRS.

3. Procédé selon la revendication 1 ou 2, dans lequel dans un cas où le type de DMRS est 1 et le nombre maximal de symboles DMRS à chargement frontal est 2, la configuration de ports DMRS correspondant à la combinaison de RANK prenant en charge 3 couches et 1 couche pour envoyer des liaisons de données faisant face à différentes directions de TRP à travers deux panneaux est : combinaison de ports DMRS {0, 1, 2, 4},
dans lequel, les ports DMRS 0, 1 et 4 prennent en charge qu'un nombre de couches de données envoyées dans une première direction d'indication d'informations de faisceau correspond au nombre de couches de RANK de 3, le port DMRS 2 prend en charge qu'un nombre de couches de données envoyées dans une seconde direction d'indication d'informations de faisceau correspond au nombre de couches de RANK de 1, et les ports DMRS 0, 1 et 4 sont quasi co-localisés.

4. Procédé selon la revendication 1 ou 2, dans lequel dans un cas où le type de DMRS est 1 et le nombre maximal de symboles DMRS à chargement frontal est 2, la configuration de ports DMRS correspondant à la combinaison de RANK prenant en charge 1 couche et 3 couches pour envoyer des liaisons de données faisant face à différentes directions de TRP à travers deux panneaux est : combinaison de ports DMRS {0, 2, 3, 6},
dans lequel, le port DMRS 0 prend en charge qu'un nombre de couches de données envoyées dans la première direction d'indication d'informations de faisceau correspond au nombre de couches de RANK de 1, les ports DMRS 2, 3, 6 prennent en charge qu'un nombre de couches de données envoyées dans la seconde direction d'indication d'informations de faisceau correspond au nombre de couches de RANK de 3, et les ports DMRS 2, 3 et 6 sont quasi co-localisés.

5. Procédé selon la revendication 1 ou 2, dans lequel dans un cas où le type de DMRS est 2, le nombre maximal de symboles DMRS à chargement frontal est 1, le RANK occupe 3 groupes de multiplexage par répartition de code, CDM, et les ports DMRS d'un deuxième groupe CDM et d'un troisième groupe CDM sont quasi co-localisés, la configuration de ports DMRS correspondant à la combinaison de RANK prenant en charge 1 couche et 3 couches pour envoyer des liaisons de données faisant face à différentes directions de TRP à travers deux panneaux est au moins l'une des suivantes :
combinaison de ports DMRS {0, 2, 3, 4},
combinaison de ports DMRS {0, 2, 4, 5},
combinaison de ports DMRS {0, 3, 4, 5};
dans lequel, dans la combinaison de ports DMRS {0, 2, 3, 4}, le port DMRS 0 prend en charge qu'un nombre de couches de données envoyées dans une première direction d'indication d'informations de faisceau correspond au nombre de couches de RANK de 1, les ports DMRS 2, 3, 4 prennent en charge qu'un nombre de couches de données envoyées dans une seconde direction d'indication d'informations de faisceau correspond au nombre de couches de RANK de 3, et les ports DMRS 2, 3 et 4 sont quasi co-localisés ;
dans lequel, dans la combinaison de ports DMRS {0, 2, 4, 5}, le port DMRS 0 prend en charge que le nombre de couches de données envoyées dans la première direction d'indication d'informations de faisceau correspond au nombre de couches de RANK de 1, les ports DMRS 2, 4, 5 prennent en charge que le nombre de couches de données envoyées dans la seconde direction d'indication d'informations de faisceau correspond au nombre de couches de RANK de 3, et les ports DMRS 2, 4 et 5 sont quasi co-localisés ;
dans lequel, dans la combinaison de ports DMRS {0, 3, 4, 5}, le port DMRS 0 prend en charge que le nombre de couches de données envoyées dans la première direction d'indication d'informations de faisceau correspond au nombre de couches de RANK de 1, les ports DMRS 3, 4, 5 prennent en charge que le nombre de couches de données envoyées dans la seconde direction d'indication d'informations de faisceau correspond au nombre de couches de RANK de 3, et les ports DMRS 3, 4, 5 sont quasi co-localisés.

6. Procédé selon la revendication 1 ou 2, dans lequel dans un cas où le type de DMRS est 2, le nombre maximal de symboles DMRS à chargement frontal est 1, le RANK occupe 3 groupes CDM, et des ports DMRS d'un premier groupe CDM et d'un deuxième groupe CDM sont quasi co-localisés, la configuration de ports DMRS correspondant à la combinaison de RANK prenant en charge 3 couches et 1 couche pour envoyer des liaisons de données faisant face à différentes directions de TRP à travers deux panneaux est au moins l'une des suivantes :
combinaison de ports DMRS {0, 1, 2, 4},
combinaison de ports DMRS {0, 1, 2, 5},
combinaison de ports DMRS {0, 2, 3, 4},
combinaison de ports DMRS {0, 2, 3, 5};
dans lequel, dans la combinaison de ports DMRS {0, 1, 2, 4}, les ports DMRS 0, 1, 2 prennent en charge qu'un nombre de couches de données envoyées dans une première direction d'indication d'informations de faisceau correspond au nombre de couches de RANK de 3, le port DMRS 4 prend en charge qu'un nombre de couches de données envoyées dans une seconde direction d'indication d'informations de faisceau correspond au nombre de couches de RANK de 1, et les ports DMRS 0, 1 et 2 sont quasi co-localisés ;
dans lequel, dans la combinaison de ports DMRS {0, 1, 2, 5}, les ports DMRS 0, 1, 2 prennent en charge que le nombre de couches de données envoyées dans la première direction d'indication d'informations de faisceau correspond au nombre de couches de RANK de 3, le port DMRS 5 prend en charge que le nombre de couches de données envoyées dans la seconde direction d'indication d'informations de faisceau correspond au nombre de couches de RANK de 1, et les ports DMRS 0, 1 et 2 sont quasi co-localisés ;
dans lequel, dans la combinaison de ports DMRS {0, 2, 3, 4}, les ports DMRS 0, 2, 3 prennent en charge que le nombre de couches de données envoyées dans la première direction d'indication d'informations de faisceau correspond au nombre de couches de RANK de 3, le port DMRS 4 prend en charge que le nombre de couches de données envoyées dans la seconde direction d'indication d'informations de faisceau correspond au nombre de couches de RANK de 1, et les ports DMRS 0, 2 et 3 sont quasi co-localisés ;
dans lequel, dans la combinaison de ports DMRS {0, 2, 3, 5}, les ports DMRS 0, 2, 3 prennent en charge que le nombre de couches de données envoyées dans la première direction d'indication d'informations de faisceau correspond au nombre de couches de RANK de 3, le port DMRS 5 prend en charge que le nombre de couches de données envoyées dans la seconde direction d'indication d'informations de faisceau correspond au nombre de couches de RANK de 1, et les ports DMRS 0, 2 et 3 sont quasi co-localisés.

7. Procédé selon la revendication 1 ou 2, dans lequel dans un cas où le type de DMRS est 2, le nombre maximal de symboles DMRS à chargement frontal est 2, et le RANK occupe 2 groupes CDM, la configuration de ports DMRS correspondant à la combinaison de RANK prenant en charge 1 couche et 3 couches pour envoyer des liaisons de données faisant face à différentes directions de TRP à travers deux panneaux est au moins l'une des suivantes :
combinaison de ports DMRS {0, 2, 3, 8},
combinaison de ports DMRS {0, 4, 5, 10};
dans lequel, dans la combinaison de ports DMRS {0, 2, 3, 8}, le port DMRS 0 prend en charge qu'un nombre de couches de données envoyées dans une première direction d'indication d'informations de faisceau correspond au nombre de couches de RANK de 1, les ports DMRS 2, 3 et 8 prennent en charge qu'un nombre de couches de données envoyées dans une seconde direction d'indication d'informations de faisceau correspond au nombre de couches de RANK de 3, et les ports DMRS 2, 3 et 8 sont quasi co-localisés ;
dans lequel, dans la combinaison de ports DMRS {0, 4, 5, 10}, le port DMRS 0 prend en charge que le nombre de couches de données envoyées dans la première direction d'indication d'informations de faisceau correspond au nombre de couches de RANK de 1, les ports DMRS 4, 5 et 10 prennent en charge que le nombre de couches de données envoyées dans la seconde direction d'indication d'informations de faisceau correspond au nombre de couches de RANK de 3, et les ports DMRS 4, 5 et 10 sont quasi co-localisés.

8. Procédé selon la revendication 1 ou 2, dans lequel dans un cas où le type de DMRS est 2, le nombre maximal de symboles DMRS à chargement frontal est 2, et le RANK occupe 2 groupes CDM, la configuration de ports DMRS correspondant à la combinaison de RANK prenant en charge 3 couches et 1 couche pour envoyer des liaisons de données faisant face à différentes directions de TRP à travers deux panneaux est au moins l'une des suivantes :
combinaison de ports DMRS {0, 1, 2, 6},
combinaison de ports DMRS {0, 1, 4, 6};
dans lequel, dans la combinaison de ports DMRS {0, 1, 2, 6}, les ports DMRS 0, 1 et 6 prennent en charge qu'un nombre de couches de données envoyées dans une première direction d'indication d'informations de faisceau correspond au nombre de couches de RANK de 3, le port DMRS 2 prend en charge qu'un nombre de couches de données envoyées dans une seconde direction d'indication d'informations de faisceau correspond au nombre de couches de RANK de 1, et les ports DMRS 0, 1 et 6 sont quasi co-localisés ;
dans lequel, dans la combinaison de ports DMRS {0, 1, 4, 6}, les ports DMRS 0, 1 et 6 prennent en charge que le nombre de couches de données envoyées dans la première direction d'indication d'informations de faisceau correspond au nombre de couches de RANK de 3, le port DMRS 4 prend en charge que le nombre de couches de données envoyées dans la seconde direction d'indication d'informations de faisceau correspond au nombre de couches de RANK de 1, et les ports DMRS 0, 1 et 6 sont quasi co-localisés.

9. Procédé selon la revendication 1 ou 2, dans lequel dans un cas où le type de DMRS est 2, le nombre maximal de symboles DMRS à chargement frontal est 2, le RANK occupe 3 groupes CDM, et des ports DMRS d'un deuxième groupe CDM et d'un troisième groupe CDM sont quasi co-localisés, la configuration de ports DMRS correspondant à la combinaison de RANK prenant en charge 1 couche et 3 couches pour envoyer des liaisons de données faisant face à différentes directions de TRP à travers deux panneaux est au moins l'une des suivantes :
combinaison de ports DMRS {0, 2, 3, 4},
combinaison de ports DMRS {0, 2, 4, 5};
dans lequel, dans la combinaison de ports DMRS {0, 2, 3, 4}, le port DMRS 0 prend en charge qu'un nombre de couches de données envoyées dans une première direction d'indication d'informations de faisceau correspond au nombre de couches de RANK de 1, les ports DMRS 2, 3 et 4 prennent en charge qu'un nombre de couches de données envoyées dans une seconde direction d'indication d'informations de faisceau correspond au nombre de couches de RANK de 3, et les ports DMRS 2, 3 et 4 sont quasi co-localisés ;
dans lequel, dans la combinaison de ports DMRS {0, 2, 4, 5}, le port DMRS 0 prend en charge que le nombre de couches de données envoyées dans la première direction d'indication d'informations de faisceau correspond au nombre de couches de RANK de 1, les ports DMRS 2, 4 et 5 prennent en charge que le nombre de couches de données envoyées dans la seconde direction d'indication d'informations de faisceau correspond au nombre de couches de RANK de 3, et les ports DMRS 2, 4 et 5 sont quasi co-localisés.

10. Procédé selon la revendication 1 ou 2, dans lequel dans un cas où le type de DMRS est 2, le nombre maximal de symboles DMRS à chargement frontal est 2, le RANK occupe 3 groupes CDM, et des ports DMRS d'un premier groupe CDM et d'un deuxième groupe CDM sont quasi co-localisés, la configuration de ports DMRS correspondant à la combinaison de RANK prenant en charge 3 couches et 1 couche pour envoyer des liaisons de données faisant face à différentes directions de TRP à travers deux panneaux est la combinaison de ports DMRS {0, 1, 2, 4}, dans lequel les ports DMRS 0, 1 et 2 prennent en charge qu'un nombre de couches de données envoyées dans une première direction d'indication d'informations de faisceau correspond au nombre de couches de RANK de 3, le port DMRS 4 prend en charge qu'un nombre de couches de données envoyées dans une seconde direction d'indication d'informations de faisceau correspond au nombre de couches de RANK de 1, et les ports DMRS 0, 1 et 2 sont quasi co-localisés.

11. Procédé selon l'une quelconque des revendications 3 à 10, dans lequel la première direction d'indication d'informations de faisceau ou la seconde direction d'indication d'informations de faisceau est déterminée par des informations d'indication de ressource de détection en liaison montante, SRI, ou des informations d'indication de configuration de transmission en liaison montante, UL TCI ; ou
dans lequel la première direction d'indication d'informations de faisceau correspond à une direction de faisceau de transmission d'un premier Panneau sur le dispositif terminal ou à une direction de faisceau de transmission faisant face à un premier TRP d'un dispositif côté réseau ; la seconde direction d'indication d'informations de faisceau correspond à une direction de faisceau de transmission d'un second Panneau sur le dispositif terminal ou à une direction de faisceau de transmission faisant face à un second TRP du dispositif côté réseau.

12. Procédé selon l'une quelconque des revendications 1 à 10, dans lequel
les informations de configuration DMRS sont indiquées par une signalisation de couche supérieure ; ou
le nombre de couches de RANK de données de transmission est indiqué par une signalisation d'informations de commande de liaison descendante, DCI ; ou
une relation quasi co-localisée entre des groupes CDM est déterminée par une signalisation de configuration de groupe CDM envoyée par un dispositif côté réseau.

13. Dispositif terminal, comprenant :
un premier module émetteur-récepteur, configuré pour lire une table d'allocation de ports DMRS sur la base d'informations de configuration DMRS et d'un nombre de couches de RANK de données de transmission reçues depuis un dispositif côté réseau, dans lequel la table d'allocation de ports DMRS comprend au moins une configuration de ports DMRS, la configuration de ports DMRS correspond à un PUSCH pour une transmission coordonnée envoyé sur la base de multiples panneaux d'antenne faisant face à un point de transmission-réception, TRP, et les informations de configuration DMRS comprennent un type de DMRS et un nombre maximal de symboles DMRS à chargement frontal ; et
un module d'allocation, configuré pour déterminer une configuration de ports DMRS en interrogeant la table d'allocation de ports DMRS selon des informations d'allocation de ports DMRS reçues depuis le dispositif côté réseau, dans lequel la configuration de ports DMRS prend en charge des combinaisons de RANK pour envoyer des couches de transmission de données de directions de TRP différentes sur différents panneaux, dans lequel un nombre total de couches de RANK de données de transmission est 4, la configuration de ports DMRS prend en charge une combinaison de RANK spécifique pour prendre en charge l'envoi de liaisons de données faisant face à différentes directions de TRP à travers deux panneaux, dans lequel la combinaison de RANK spécifique comprend 3 couches et 1 couche ; dans lequel les informations d'allocation de ports DMRS sont déterminées par un champ d'indication de port d'antenne dans une signalisation DCI, et le champ indique un indice dans la table d'allocation de ports DMRS ;
dans lequel un mode de transmission de transmission coordonnée PUSCH envoyée à travers multiples panneaux faisant face à multiples TRP est un mode de multiplexage par répartition spatiale, SDM, et un module émetteur-récepteur, configuré pour transmettre le PUSCH au dispositif côté réseau selon la configuration de ports DMRS déterminée.

14. Dispositif côté réseau, comprenant :
un deuxième module émetteur-récepteur, configuré pour envoyer des informations de configuration DMRS et un nombre de couches de RANK de données de transmission à un dispositif terminal, dans lequel les informations de configuration DMRS et le nombre de couches de RANK de données de transmission sont utilisés par le dispositif terminal pour lire une table d'allocation de ports DMRS, la table d'allocation de ports DMRS comprend au moins une configuration de ports DMRS, la configuration de ports DMRS correspond à un PUSCH pour une transmission coordonnée envoyé sur la base de multiples panneaux d'antenne faisant face à une paire transmission-réception, TRP, et les informations de configuration DMRS comprennent un type de DMRS et un nombre maximal de symboles DMRS à chargement frontal ; et
un troisième module émetteur-récepteur, configuré pour envoyer des informations d'allocation de ports DMRS au dispositif terminal, dans lequel les informations d'allocation de ports DMRS sont utilisées par le dispositif terminal pour interroger une configuration de ports DMRS dans la table d'allocation de ports DMRS, dans lequel la configuration de ports DMRS prend en charge des combinaisons de RANK pour envoyer des couches de transmission de données de directions de TRP différentes sur différents panneaux, dans lequel un nombre total de couches de RANK de données de transmission est 4, la configuration de ports DMRS prend en charge une combinaison de RANK spécifique pour prendre en charge l'envoi de liaisons de données faisant face à différentes directions de TRP à travers deux panneaux, dans lequel la combinaison de RANK spécifique comprend 3 couches et 1 couche ; dans lequel les informations d'allocation de ports DMRS sont déterminées par un champ d'indication de port d'antenne dans une signalisation DCI, et le champ indique un indice dans la table d'allocation de ports DMRS ;
dans lequel un mode de transmission de transmission coordonnée PUSCH envoyée à travers multiples panneaux faisant face à multiples TRP est un mode de multiplexage par répartition spatiale, SDM, et un module émetteur-récepteur, configuré pour recevoir le PUSCH depuis le dispositif côté terminal selon les informations de configuration DMRS et l'allocation de ports DMRS.
